# EUROPEAN PATENT APPLICATION

(11) **EP 4 782 609 A1**
(43) Date of publication of application: **29.07.2026**
(21) Application number: 24868313.8
(22) Date of filing: 19.09.2024
(51) Int. Cl.: E02F 9/16, A47C 7/54, B60N 2/75

(54) **WORKING MACHINE**

(30) Priority: 20.09.2023 JP 2023152924
(71) Applicant: KUBOTA CORPORATION, Osaka-shi, Osaka 530-0011 (JP)
(72) Inventor: HORII, Hiroshi, Sakai-shi, Osaka 590-0908 (JP)
(74) Representative: Cabinet Beau de Loménie
(86) International application number: PCT/JP2024/033460
(87) International publication number: WO 2025/063236

(57) **Abstract**

To achieve the stable pivoting of an operation actuator. A working machine (1) includes a seat (18), an operation actuator (27) provided in a vicinity of the seat, and an armrest (28) located rearward of the operation actuator at a predetermined distance from the operation actuator. The operation actuator is configured to be gripped and pivoted in a front-rear direction (K1) by a user (57) sitting in the seat. The armrest includes a resting surface (28d) for a forearm (58) of the user to be rested on, the resting surface (28d) being a curved surface that is curved to be convex upward in a side view of the armrest and is continuous from a position forward of the apex (61) to a position rearward of the apex (61).

## Description

### Technical Field

The present invention relates to working machines such as backhoes.

### Background Art

A working machine disclosed in Patent Literature 1 is known.

The working machine disclosed in Patent Literature 1 includes an operation actuator (operation lever) provided at a side of the seat in which the user sits. An armrest is provided behind the operation actuator.

The user rests their forearm on a top surface of the armrest, and grips and pivots the operation actuator in a front-rear direction. The top surface of the armrest is flat.

### Citation List

### Patent Literature

[Patent Literature 1] Japanese Unexamined Patent Application Publication No. 2004-308132

### Summary of Invention

### Technical Problem

When the user grips and pivots the operation actuator in the front-rear direction with the forearm rested on the armrest, the user can stably operate the operation actuator by operating the operation actuator while pressing the forearm against the armrest.

Since the top surface of the armrest of the related art is flat, when the user grips and pivots the operation actuator in the front-rear direction with their forearm rested on the armrest, the user may need to move and slide the forearm on the armrest in the front-rear direction to pivot the operation actuator. In such a case, it is difficult to pivot the operation actuator while sufficiently pressing the forearm against the armrest.

In view of the above issue, an object of the present invention is to achieve a stable operation of an operation actuator.

### Solution to Problem

A working machine according to an example embodiment of the present invention includes a seat, an operation actuator provided in a vicinity of the seat and an armrest located rearward of the operation actuator at a predetermined distance from the operation actuator, wherein the operation actuator can be gripped and pivoted in a front-rear direction by a user sitting in the seat, and the armrest includes a resting surface for a forearm of the user is to be rested on, the resting surface being a curved surface that is curved to be convex upward in a side view of the armrest and is continuous from a position forward of an apex of the curved surface to a position rearward of the apex.

The operation actuator may include a grip to be gripped by the user. A space may be provided between the grip and the armrest in which, when the user grips the grip and pivots the operation actuator in the front-rear direction with the forearm rested on the resting surface, a portion of the forearm is located lower than at least one of a tangent to the apex or a straight line connecting a bottom end of the grip and the apex.

The operation actuator may be configured to be pivoted about a pivot center located below the grip. The operation actuator may be configured such that a portion of the forearm that is between a wrist and a portion of the forearm that is rested on the armrest is at least partially located within the space when the user grips a lower portion of the grip and pivots the operation actuator forward.

The operation actuator may be configured to be pivoted about a pivot center located within the grip. The operation actuator may be configured such that a portion of the forearm that is between a wrist and a portion of the forearm that is rested on the armrest is at least partially located within the space when the user grips the grip and pivots the operation actuator backward.

The curved surface of the resting surface may be configured such that a contact portion between the forearm and the resting surface is allowed to move without sliding movement between the forearm and the resting surface when the user grips the operation actuator and pivots the operation actuator in the front-rear direction with the forearm rested on the resting surface.

The working machine may further include an armrest bracket to support the armrest. The armrest bracket may include a front-rear position adjustment mechanism to adjust a position of the armrest in the front-rear direction.

The working machine may further include an armrest bracket to support the armrest. The armrest bracket may include an up-down position adjustment mechanism to adjust a position of the armrest in an up-down direction.

The armrest may be rotatable along a circumferential direction of the resting surface.

The armrest may include an outer shape of a cylinder and the armrest may be rotatable about a central axis of the cylinder.

A pair of the operation actuators may be provided located forward of the seat and may be arranged in a machine body width direction. A pair of the armrests may be located rearward of the respective pair of operation actuators and may be arranged in the machine body width direction. The pair of armrests may be inclined such that each of the pair of armrests is inclined forward in a direction away from the other of the pair of armrests along the machine body width direction with increasing distance from a midpoint between the pair of armrests in the machine body width direction.

### Advantageous Effects of Invention

With the above-described working machine, in a case where the user pivots the operation actuator in the front-rear direction, the user can move the forearm without sliding movement between the forearm and the resting surface. With this, it is possible to pivot the operation actuator while sufficiently pressing the forearm against the armrest (resting surface) and achieve a stable operation of the operation actuator.

### Brief Description of Drawings

[FIG. 1] FIG. 1 is a schematic side view of a working machine.
[FIG. 2A] FIG. 2A is a side view of an operation portion according to a first example embodiment.
[FIG. 2B] FIG. 2B is a side view of an operation actuator, a remote control valve, an armrest and the like.
[FIG. 3] FIG. 3 is a front view of an operation portion.
[FIG. 4A] FIG. 4A is a perspective view of an armrest.
[FIG. 4B] FIG. 4B is a side view of an armrest.
[FIG. 4C] FIG. 4C is a front view of an armrest.
[FIG. 5] FIG. 5 is a side view of an armrest bracket in an attached state.
[FIG. 6] FIG. 6 is an elevational view taken in the direction of arrow D1 in FIG. 5.
[FIG. 7] FIG. 7 is a plan view taken in the direction of arrow D2 in FIG. 5.
[FIG. 8] FIG. 8 is a side view of an operation portion with an operation actuator pushed.
[FIG. 9A] FIG. 9A is an enlarged side view of an operation actuator and the like when the operation actuator is pushed.
[FIG. 9B] FIG. 9B is an enlarged side view of an operation actuator and the like when the operation actuator is pushed.
[FIG. 10] FIG. 10 is a side view of an operation portion when an operation actuator is pulled.
[FIG. 11] FIG. 11 is an enlarged side view of an operation actuator and the like when the operation actuator is pulled.
[FIG. 12] FIG. 12 is a plan view of an operation actuator and the like when the operation actuator is pulled.
[FIG. 13] FIG. 13 is a side view of an operation portion according to a second example embodiment.
[FIG. 14] FIG. 14 is a perspective view of an operation portion according to the second example embodiment.
[FIG. 15] FIG. 15 is a side view of an operation actuator.
[FIG. 16] FIG. 16 is a plan view showing an armrest in an attached state.
[FIG. 17] FIG. 17 is a plan view showing an armrest in another attached state.
[FIG. 18] FIG. 18 is an enlarged side view of an operation actuator and the like when the operation actuator is pushed.
[FIG. 19A] FIG. 19A is an enlarged side view of an operation actuator and the like when the operation actuator is pulled.
[FIG 19B] FIG. 19B is an enlarged side view of an operation actuator and the like when the operation actuator is pulled.
[FIG. 20] FIG. 20 is a side view of an operation actuator when pushed according to a first variation.
[FIG. 21] FIG. 21 is a side view of an operation actuator when pulled according to the first variation.
[FIG. 22] FIG. 22 is a side view showing a contact-portion-movement amount, a wrist angle and a forearm rotation angle.
[FIG. 23] FIG. 23 is a side view of an operation actuator when pushed according to a second variation.
[FIG. 24] FIG. 24 is a side view of an operation actuator when pulled according to the second variation.
[FIG. 25] FIG. 25 is a side view of an operation actuator when pushed according to a third variation.
[FIG. 26] FIG. 26 is a side view of an operation actuator when pulled according to the third variation.
[FIG. 27] FIG. 27 is a side view of an operation actuator when pushed according to a fourth variation.
[FIG. 28] FIG. 28 is a side view of an operation actuator when pulled according to the fourth variation.
[FIG. 29] FIG. 29 is a side view of an operation actuator when pushed according to a fifth variation.
[FIG. 30] FIG. 30 is a side view of an operation actuator when pulled according to the fifth variation.
[FIG. 31] FIG. 31 is a side view of an operation actuator when pushed according to a sixth variation
[FIG. 32] FIG. 32 is a side view of an operation actuator when pulled according to the sixth variation.
[FIG. 33] FIG. 33 is a side view of an operation actuator when pushed according to a seventh variation.
[FIG. 34] FIG. 34 is a side view of an operation actuator when pulled according to the seventh variation.
[FIG. 35] FIG. 35 is a side view of an operation actuator when pushed according to an eighth variation.
[FIG. 36] FIG. 36 is a side view of an operation actuator when pulled according to the eighth variation.
[FIG. 37] FIG. 37 is a side view of an operation portion according to a third example embodiment.
[FIG. 38] FIG. 38 is a front view of an operation portion according to the third example embodiment.
[FIG. 39] FIG. 39 is a side view of an armrest and an armrest bracket.
[FIG. 40] FIG. 40 is a front view of an armrest and an armrest bracket.
[FIG. 41] FIG. 41 is a side view of an armrest when pushed.
[FIG. 42] FIG. 42 is an enlarged side view of an operation actuator and the like when the operation actuator is pushed.
[FIG. 43] FIG. 43 is a side view of an armrest when pulled.
[FIG. 44] FIG. 44 is an enlarged side view of an operation actuator and the like when the operation actuator is pulled.
[FIG. 45] FIG. 45 is an enlarged side view of an operation actuator when the operation actuator is pushed.
[FIG. 46] FIG. 46 is an enlarged side view of an operation actuator and the like when the operation actuator is pulled.
[FIG. 47] FIG. 47 is an enlarged side view of an operation actuator and the like when the operation actuator is pushed.
[FIG. 48] FIG. 48 is an enlarged side view of an operation actuator and the like when the operation actuator is pulled.
[FIG. 49] FIG. 49 is an enlarged side view of an operation actuator and the like when the operation actuator is pushed.
[FIG. 50] FIG. 50 is an enlarged side view of an operation actuator and the like when the operation actuator is pulled.

### Description of Embodiments

The following describes example embodiments of the present invention with reference to drawings.

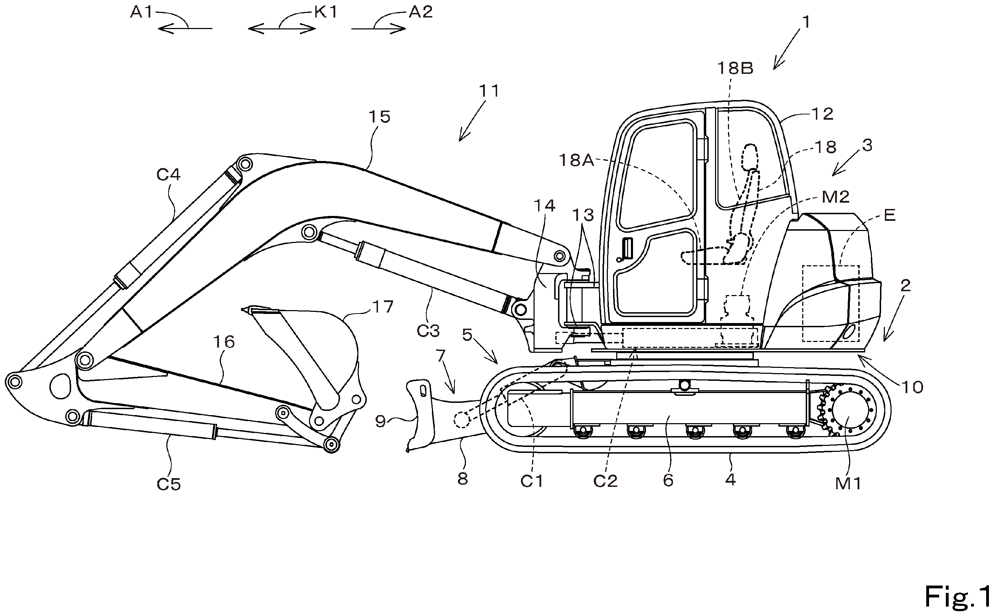

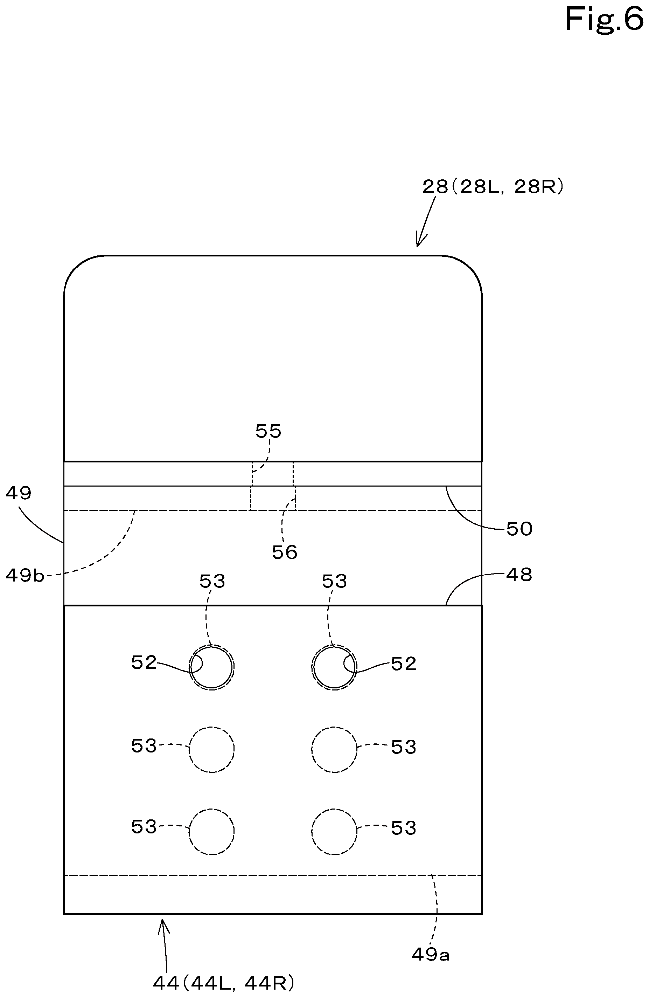

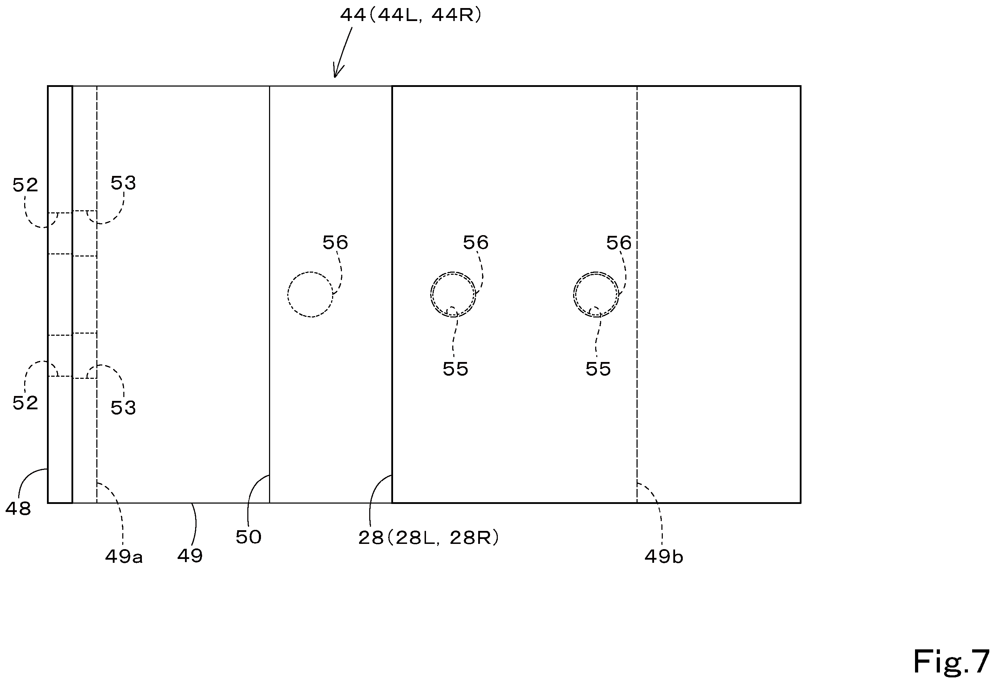

FIGS. 1 to 12 illustrate a first example embodiment.

FIG. 1 is a schematic side view of a working machine 1 according to the present example embodiment. In the present example embodiment, a backhoe, which is a swiveling working machine, is illustrated as an example of the working machine 1.

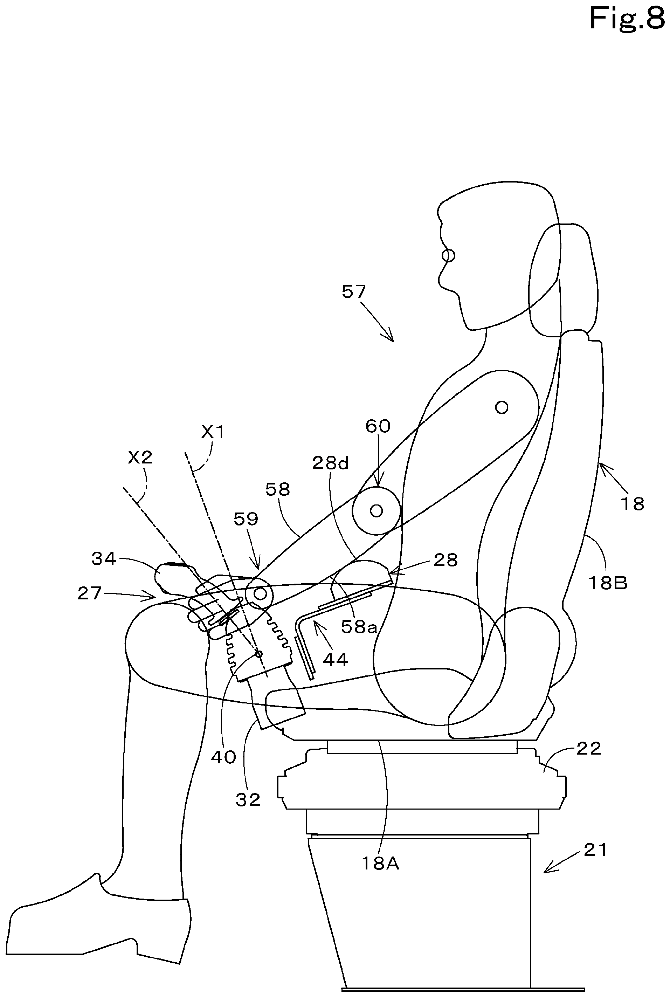

The working machine 1 mainly includes a traveling body 2 at a lower portion of the working machine 1 and a swiveling body 3 provided on the traveling body 2 at an upper portion of the working machine 1. The swiveling body 3 includes a seat 18 in which a user (driver, operator) 57 in the working machine 1 sits (see FIG. 8). The seat 18 includes a seat portion 18A and a backrest portion 18B. The seat portion 18A is a portion in which the user 57 sits (on which the user 57 places their buttocks and thighs). The backrest portion 18B is a portion against which the user 57 places its back when sitting, and is provided at a rear portion of the seat portion 18A such that the backrest portion 18B extends upward.

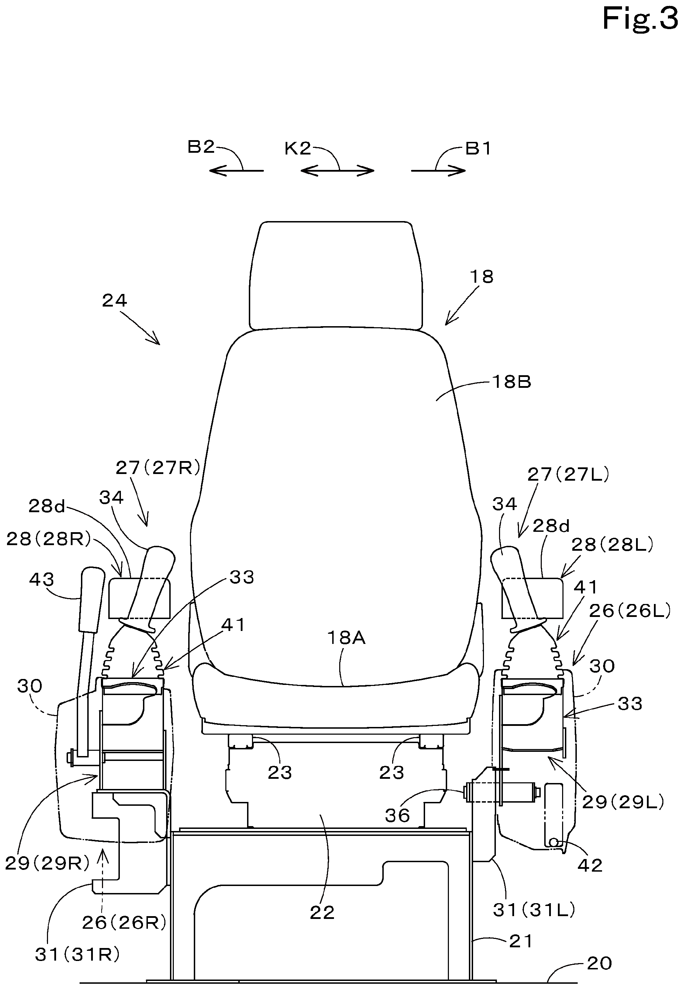

In the description of the present example embodiment, a forward direction as seen from the user 57 on the seat 18 (direction of arrow A1 in FIG. 1) is referred to as a forward direction (machine body forward direction), a rearward direction as seen from the user 57 (direction of arrow A2) is referred to as a rearward direction (machine body rearward direction), a leftward direction as seen from the user 57 (direction toward a near side in FIG. 1, a direction of arrow B1 in FIG. 3) is referred to as a leftward direction, and a rightward direction as seen from the user 57 (direction toward a far side in FIG. 1, a direction of arrow B2 in FIG. 3) is referred to as a rightward direction.

A horizontal direction perpendicular to a front-rear direction (machine body front-rear direction) K1 is referred to as a machine body width direction (a direction of arrow K2 in FIG. 3, a left-right direction). A rightward direction from the widthwise center of a machine body 10 or a leftward direction from the widthwise center is referred to as a machine body width outward direction. That is, the machine body width outward direction is a direction away from the widthwise center of the machine body 10 along the machine body width direction K2. A direction opposite to the machine body width outward direction is referred to as a machine body width inward direction. That is, the machine body width inward direction is a direction toward the widthwise center of the machine body 10 along the machine body width direction K2.

The traveling body 2 includes crawler traveling devices 5 provided at the right and left sides of a traveling frame 6. Each traveling device 5 includes a traveling motor M1 including a hydraulic motor (hydraulic actuator) to cause an endless crawler belt 4 to circumferentially rotate. A dozer device 7 is located at a front portion of the traveling frame 6. The dozer device 7 includes a blade 9 at a front end of a support arm 8 pivotally connected to the traveling frame 6 and swingable up and down. The support arm 8 is driven to move up and down by extension and retraction of a dozer cylinder C1 including a hydraulic cylinder (hydraulic actuator).

The swiveling body 3 includes the machine body (swiveling base) 10 provided on the traveling frame 6 rotatably about a swiveling axis extending in an up-down direction, a working device 11 attached to a front portion of the machine body 10, and a cabin 12 provided on the machine body 10. The seat 18 is provided in the interior of the cabin 12, and is surrounded by the cabin 12.

Note that in the present example embodiment, the working machine 1 is configured such that the seat 18 and the like are provided inside the cabin 12 (cabin configuration), but this does not imply any limitations. The working machine 1 may be configured such that the seat 18 is open to the outside in the front-rear direction K1 and the machine body width direction K2 and is coved by a roof (canopy) from above (canopy configuration). The working machine 1 may be configured such that the seat 18 is open to the outside in the front-rear direction K1, in the machine width body direction K2, and in the upward direction.

The machine body 10 includes an engine E, a radiator, a fuel tank, a hydraulic fluid tank, a battery and/or the like thereon or therein. The machine body 10 is driven to rotate by a swiveling motor M2 including a hydraulic motor (hydraulic actuator).

A support bracket 13 projecting forward from the machine body 10 is provided at the front portion of the machine body 10. A swing bracket 14 is rotatably supported by the support bracket 13 about an axis extending in the up-down direction. The swing bracket 14 is driven to swing leftward and rightward by a swiveling cylinder C2 including a hydraulic cylinder (hydraulic actuator).

The working device 11 includes a boom 15, a boom cylinder C3, an arm 16, an arm cylinder C4, a working tool (bucket) 17 and a working tool cylinder (bucket cylinder) C5.

The boom 15 is pivotally connected at a proximal portion thereof to an upper portion of the swing bracket 14 such that the boom 15 is rotatable about an axis extending in the machine body width direction K2 and is swingable in the up-down direction. The boom cylinder C3 extends between the boom 15 and the swing bracket 14, and extends and retracts to drive the boom 15 to swing.

The arm 16 is pivotally connected to a distal end of the boom 15 such that the arm 16 is rotatable about an axis extending in the machine body width direction K2, and is swingable in the front-rear direction K1. The arm cylinder C4 extends between the arm 16 and the boom 15, and extends and retracts to drive the arm 16 to swing.

The working tool 17 is pivotally connected to a distal end of the arm 16 such that the working tool 17 is rotatable about an axis extending in the machine body width direction K2, and is swingable in the front-rear direction K1. The working tool cylinder C5 extends between the working tool 17 and the arm 16, and extends and retracts to drive the working tool 17 to swing. In the present example embodiment, a bucket is described as an example of the working tool 17. Instead of the bucket, a working tool (attachment) such as a palette fork or a manure fork or a working tool (hydraulic attachment) including a hydraulic actuator such as a sweeper, a mower or a breaker can be attached as the working tool 17.

The boom cylinder C3, the arm cylinder C4 and the working tool cylinder (bucket cylinder) C5 each include a hydraulic cylinder (hydraulic actuator).

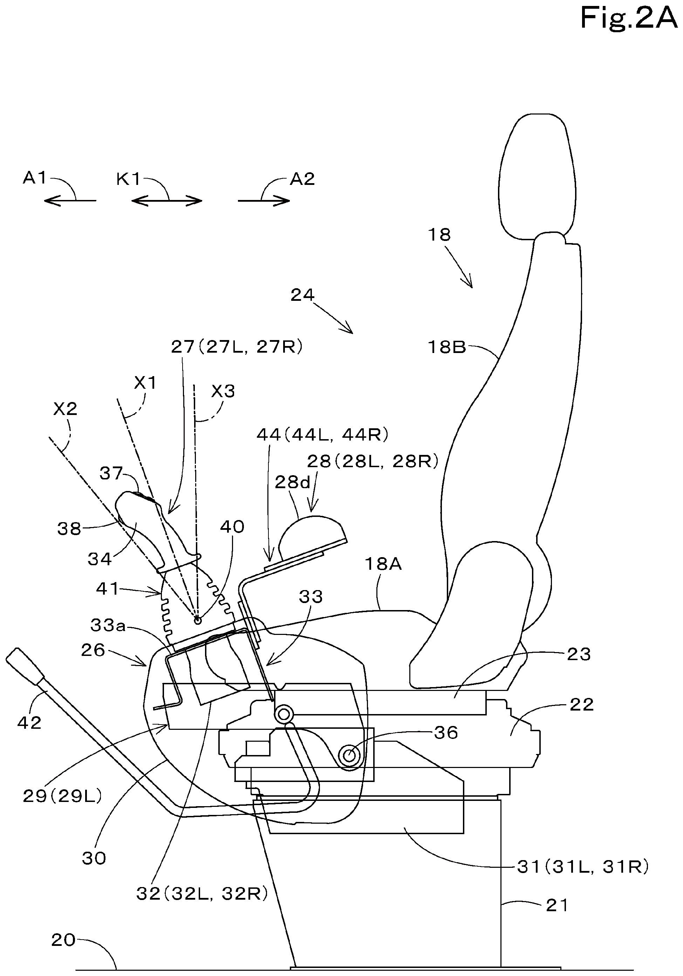

As shown in FIGS. 2A and 3, the seat 18 is provided on a seat base 21 which is attached to a floor 20 defining an upper portion of the machine body 10 or a bottom portion of the cabin 12. Specifically, a seat support 22 such as a suspension device is attached on the seat base 21. The seat 18 is provided on an upper portion of the seat support 22 such that the position thereof in the front-rear direction K1 is adjustable via a pair of left and right slide rails 23.

The seat 18, together with components, devices and/or the like in the vicinity thereof, defines an operation portion 24. As shown in FIGS. 2A and 3, the components and/or the like provided in the vicinity of the seat 18 include console(s) 26, operation actuator(s) 27, armrest(s) 28 and traveling manual operator(s) to control the traveling devices (not illustrate). In the present first example embodiment, each console 26, each operation actuator 27 and each armrest 28 are provided at a side of the seat 18 (laterally to the seat 18 in the machine body width direction K2). The traveling manual operators are located forward of the seat 18.

As shown in FIG. 3, the consoles 26, the operation actuators 27 and the armrests 28 are provided at the left and right sides of the seat 18. As shown in FIGS. 2A and 3, each of the consoles 26 includes a console bracket 29 and a console cover 30 to cover the console bracket 29. Attachment brackets 31 are provided at the left and the right of the seat base 21. The left console bracket 29L is attached to the left attachment bracket 31L such that the left console bracket 29L is swingable about an axis of a support shaft 36 extending in the machine body width direction K2. The right console bracket 29R is attached to the right attachment bracket 31R.

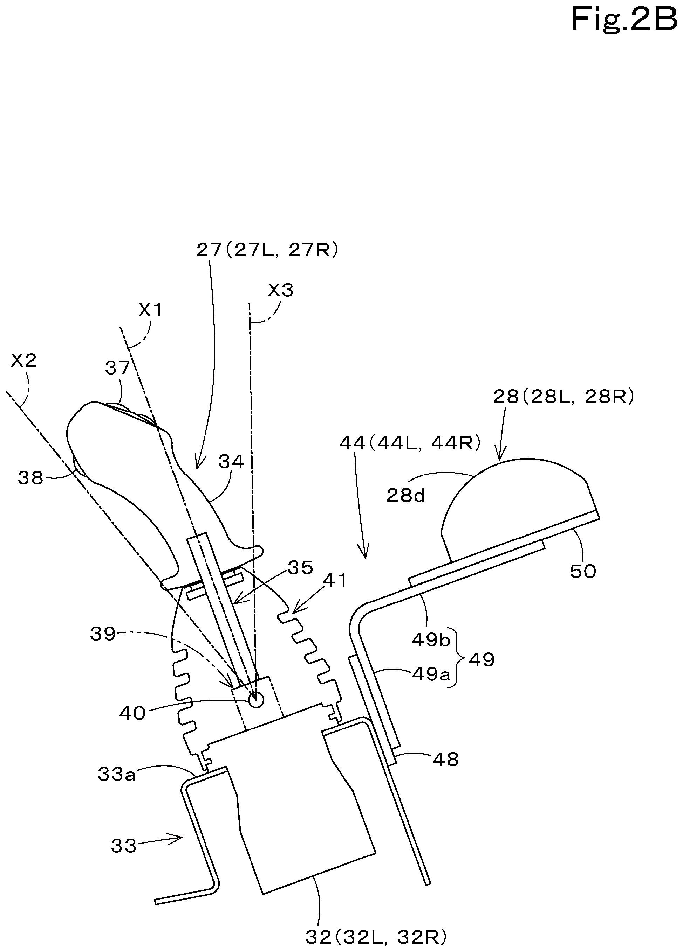

As shown in FIG. 2A, each of the left and right console brackets 29 includes a valve bracket 33 provided at an upper front portion of the console 26, and a remote control valve 32 is attached to an upper wall 33a (see FIG. 2B) of the valve bracket 33.

The left and right operation actuators 27 each include a lever to be gripped and operated by the user 57. Each operation actuator 27 is located at a front portion of the corresponding console 26 and above the corresponding remote control valve 32. The left remote control valve 32L can be operated using the left operation actuator 27L, and the right remote control valve 32R can be operated using the right operation actuator 27R.

As shown in FIG. 2B, each operation actuator 27 includes a grip 34 that the user 57 grips with their hand and a lever main body 35 in a rod form with the grip 34 attached thereto. The grip 34 is attached to an upper portion of the lever main body 35.

First switch(es) 37 and second switch(es) 38 are provided on the grip 34. The first switch 37 is provided on a rear side of an upper portion of the grip 34. The first switch 37 is, for example, a switch to be operated to the left and the right using a thumb, such as a slide switch slidable leftward and rightward or a rocker switch swingable leftward and rightward. The second switch 38 is provided on a front side of the upper portion of the grip 34. The second switch 38 is, for example, a trigger switch.

As shown in FIG. 2B, the lever main body 35 includes, for example, a shaft. A lower portion of the lever main body 35 is connected to the remote control valve 32 via a joint structure (universal joint or the like) 39 such that the lever main body 35 is swingable (pivotable) about a swing center (pivot center) 40. Accordingly, the pivot center 40 of each operation actuator 27 in the first example embodiment is located below the grip 34. The operation actuator 27 is configured to be returned to a neutral position by a neutral position return mechanism (not illustrated) when the operation actuator 27 is not being operated.

The operation actuator 27 is swingable about the pivot center 40 at least in the front-rear direction K1. In the present example embodiment, the operation actuator 27 is swingable about the pivot center 40 in the front-rear direction K1, the machine body width direction (left-right direction) K2, and diagonal directions between the front-rear direction K1 and the machine body width direction K2. A boot 41 to cover the lever main body 35, the joint structure 39 and/or the like is provided between the grip 34 and the remote control valve 32.

The remote control valve 32 is a pilot valve to pilot-operate control valve(s) to switch the direction of pressure fluid with respect to hydraulic actuator(s) provided in the working machine 1. Accordingly, the operation actuator 27, when pivoted, controls, via the remote control valve 32, a to-be-controlled object which is provided in the working machine 1 and which is to be driven by hydraulic pressure. The remote control valve 32 is configured to pilot-operate hydraulic actuator(s) configured to drive to-be-controlled object(s) provided in the working machine 1. The to-be-controlled object is, for example, the boom 15, the arm 16, the working tool 17 and/or the machine body 10, but this does not imply any limitations.

Each remote control valve 32 is configured to control two control valves. That is, each of the operation actuators 27 is configured to control two to-be-controlled objects. The operation actuator 27 is configured to control one of the two to-be-controlled objects by being pivoted in the front-rear direction, and control the other of the two to-be-controlled objects by being pivoted in the left-right direction. For example, the left operation actuator 27 is configured to perform two of the following actions: swinging the boom 15; swinging the arm 16; swinging the working tool 17; and swiveling the machine body 10, whereas the right operation actuator 27 is configured to perform the remaining two of the actions. The left and right operation actuators 27 are not limited to a configuration to control the remote control valve 32, and may each include an electrical joystick to output an electrical signal according to the operation thereof.

FIGS. 2A and 2B each illustrate one of the operation actuators 27 in a neutral position, in which a dash-dotted line X1 indicates the neutral position of the operation actuator 27. In FIGS. 2A and 2B, a dash-dotted line X2 indicates a forward pivoted position when the operation actuator 27 has been pivoted forward from the neutral position X1, and a dash-dotted line X3 indicates a rearward pivoted position when the operation actuator 27 has been pivoted reward from the neutral position X1.

As shown in FIG. 2A, a locking lever 42 is provided on the left console 26L. When the user 57 pulls up the locking lever 42 when the user 57 exits the working machine 1, the console 26 is swung upward about the support shaft 36, and the locking lever 42 and the console 26 are moved to a position where and the locking lever 42 and the console 26 do not hinder the user 57 from entering and exiting the working machine 1. The locking lever 42 is configured such that hydraulic actuators provided in or on the working machine 1 cannot be operated when the locking lever 42 is pulled up. As shown in FIG. 3, a dozer lever 43 to control the dozer device 7 is provided on the right console 26R.

As shown in FIGS. 2A and 3, the left armrest 28L is located rearward of a lower portion of the grip 34 of the left operation actuator 27L at a predetermined distance from the lower portion of the grip 34, and the right armrest 28R is located rearward of the lower portion of the grip 34 of the right operation actuator 27L at a predetermined distance from the lower portion of the grip 34.

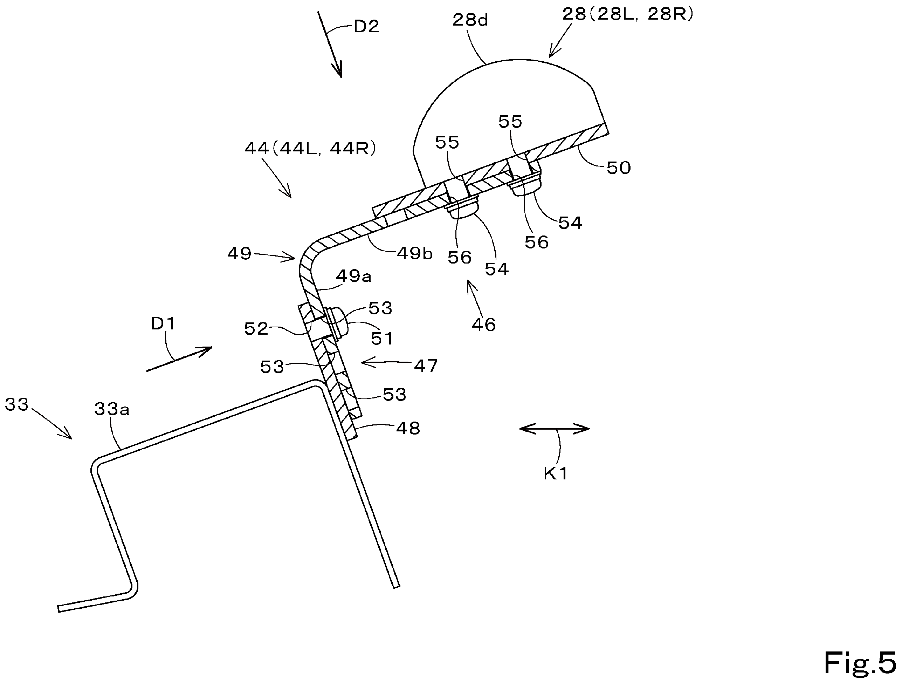

Armrest brackets 44 are provided on the left console bracket 29L and the right console bracket 29R, the left armrest 28L is attached to the left armrest bracket 44L, and the right armrest 28R is attached to the right armrest bracket 44R. The armrest brackets 44 each include a front-rear position adjustment mechanism (see FIG. 5) 46 to adjust the position of the corresponding armrest 28 in the front-rear direction K1. The armrest brackets 44 each include an up-down position adjustment mechanism (see FIG. 5) 47 to adjust the position of the corresponding armrest 28 in the up-down direction.

As shown in FIGS. 5, 6 and 7, the armrest brackets 44 each include a first plate 48, a second plate 49 and a third plate 50 each including a plate material.

The first plate 48 has a flat shape and is fixed to the console bracket 29. Specifically, as shown in FIG. 5, the first plate 48 is provided behind the valve bracket 33 such that a plate surface thereof faces forward with respect to the machine body, and a lower portion of a front surface of the first plate 48 is fixed to an upper portion of the valve bracket 33. The first plate 48 is inclined diagonally forward and upward.

As shown in FIG. 5, the second plate 49 includes a first section 49a with a plate surface thereof facing forward with respect to the machine body, and a second section 49b with a plate surface thereof facing upward, and an upper portion of the first section 49a and a front portion of the second section 59b are connected in an L shape. The first section 49a is inclined at the same angle as the first plate 48, and is placed on a rear surface of the first plate 48 and is attached to the first plate 48 via a pair of left and right bolts 51. The bolts 51 pass through the first section 49a and are screwed into screw holes 52 in the first plate 48.

The first section 49a includes insertion holes 53 each for passage of a corresponding one of the pair of left and right bolts 51. A plurality of (three) of such insertion holes 53 are provided for each bolt 51 and are arranged in the up-down direction along the inclination direction of the first section 49a. The position of the second plate 49 in the up-down direction relative to the first plate 48 is adjustable by unscrewing and removing the bolts 51 from the screw holes 52, moving the first section 49a by linearly sliding the first section 49a along the plate surface of the first plate 48, and screwing and fastening the bolts 51 into the screw holes 52 at the moved position.

The second section 49b projects rearward from the upper portion of the first section 49a. Specifically, the second section 49b projects rearward from the upper portion of the first section 49a such that the second section 49b is inclined diagonally rearward and upward.

The third plate 50 has a flat shape and is positioned such that a plate surface thereof faces upward. The armrest 28 is fixed to a rear portion of a top surface of the third plate 50. The third plate 50 is inclined at the same angle as the second section 49b of the second plate 49 and is inclined diagonally downward and forward. Accordingly, the armrest 28 is inclined diagonally downward and forward toward the operation actuator 27.

The third plate 50 is placed on the top surface of the second section 49b of the second plate 49 and attached to the second section 49b via a pair of front and rear bolts 54. The bolts 54 passe through the second section 49b and are screwed into screw holes 55 in the third plate 50.

The first section 49a includes insertion holes 56 each for passage of a corresponding one of the pair of front and rear bolts 54. At least three (three or more) of such insertion holes 56 are provided in the front-rear direction K1 along the inclination direction of the second section 49b. The position of the third plate 50 in the front-rear direction K1 relative to the second section 49b (second plate 49) is adjustable by unscrewing and removing the bolts 54 from the screw holes 55, moving the third plate 50 by linearly sliding the third plate 50 along the plate surface of the second section 49b, and screwing and fastening the bolts 54 into the screw holes 55 at the moved position.

As described above, with the position adjustment of the second plate 49 in the up-down direction relative to the first plate 48 and the position adjustment of the third plate 50 in the front-rear direction K1 relative to the second section 49b, the position of the armrest 28 is adjustable in the up-down direction and in the front-rear direction. The front-rear position adjustment mechanism 46 includes the second section 49b of the second plate 49, the third plate 50, the bolts 54 and the like. The up-down position adjustment mechanism 47 includes the first plate 48, the first section 49a of the second plate 49, the bolts 51 and the like.

The description of the present example embodiment discusses a case where the position of the armrest 28 is adjustable in three steps in the up-down direction, but this does not imply any limitations. For example, a configuration where the position of the armrest 28 is adjustable in two steps or four steps or more in the up-down direction may be used. The description of the present example embodiment discusses a case where the position of the armrest 28 is adjustable in two steps in the front-rear direction K1, but this does not imply any limitations. For example, a configuration where the position of the armrest 28 is adjustable in three steps or more in the front-rear direction K1 may be used. A configuration where the position of the armrest 28 is adjustable steplessly in the up-down direction or in the front-rear direction K1 or a configuration where the position of the armrest 28 is not adjustable may be used.

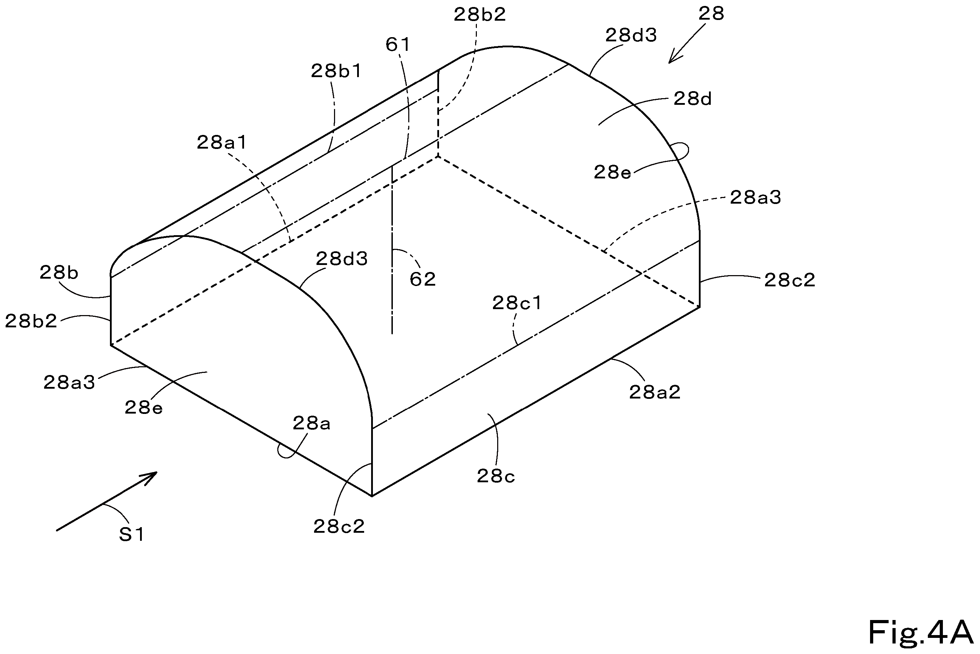

As shown in FIG. 4A, the armrests 28 each include a bottom surface 28a facing downward, a front surface 28b facing forward, a rear surface 28c at the opposite side of the front surface 28b, a top surface 28d at the opposite side of the bottom surface 28a, and left and right side surfaces 28e.

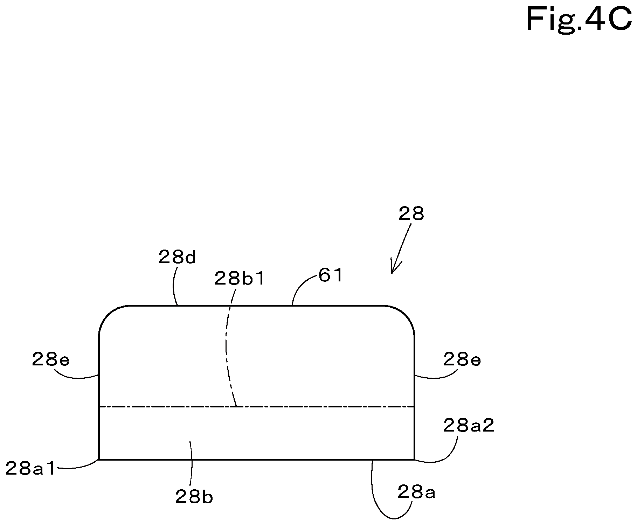

The bottom surface 28a is a rectangular flat surface including a front edge 28a1 and a rear edge 28a2 each extending in the machine body width direction K2 and left and right side edges 28a3 connecting left ends of the front edge 28a1 and the rear edge 28a2 and right ends of the front edge 28a1 and the rear edge 28a2. As shown in FIG. 4C, the front surface 28b is a rectangular flat surface elongated in the machine body width direction K2 and extending upward in perpendicular to the bottom surface 28a from the front edge 28a1 of the bottom surface 28a. As shown in FIG. 4A, the rear surface 28c is a rectangular flat surface elongated in the machine body width direction K2 extending upward in perpendicular to the bottom surface 28a from the rear edge 28a2 of the bottom surface 28a.

As shown in FIGS. 8 to 11, the top surface 28d is a resting surface for placement of a section 58a of a forearm (between a wrist 59 and an elbow 60) of the user 57 sitting in the seat 18. The section 58a is a portion of the forearm of the user 57 that is located on the outer side when the arm is bent.

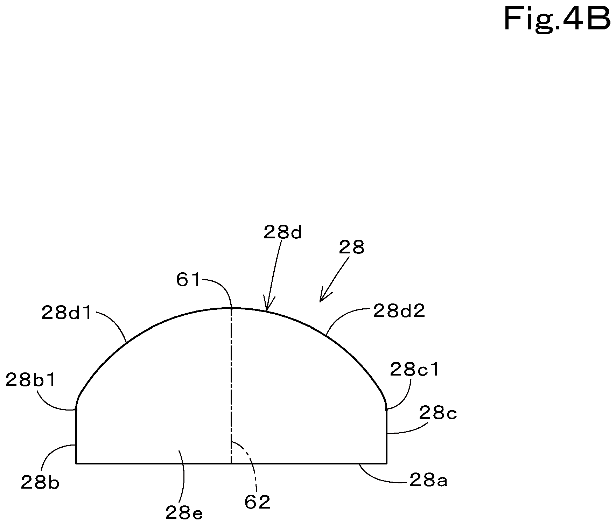

As shown in FIGS. 4B and 5, the resting surface (top surface) 28d of the armrest 28 has a curved shape curved to be convex upward in a side view of the armrest 28 (as seen in the direction of arrow S1 in FIG. 4A). Specifically, as shown in FIG. 4A, the resting surface (top surface) 28d is a curved surface that is curved to be convex upward and is continuous from a top edge 28b1 of the front surface 28b to a top edge 28c1 of the rear surface 28c. In other words, the resting surface 28d has a curved surface that is continuous from a position forward of an apex 61 of the resting surface 28d (curved surface) to a position rearward of the apex 61. As shown in FIGS. 4A and 4B, the apex 61 of the resting surface 28d (curved surface) is a portion where a vertical line 62 extending upward from the center in the front-rear direction K1 of the bottom surface 28a in perpendicular to the bottom surface 28a and the resting surface (top surface) 28d intersect each other.

As shown in FIG. 4B, in the present example embodiment, a front-side surface 28d1 extending forward from the apex 61 of the resting surface 28d and a rear-side surface 28d2 extending rearward from the apex 61 have the same curvature (the resting surface 28d has an arc shape curved to be convex upward in a side view of the armrest 28). However, this does not imply any limitations. The resting surface 28d may have a curved surface in which the front-side surface 28d1 and the rear-side surface 28d2 of the resting surface 28d have different curvatures.

The armrest 28 is not limited to the above-described shapes. It is only necessary that the armrest 28 include a resting surface 28d which is a curved surface that is curved to be convex upward in a side view of the armrest 28 and that is continuous from a position forward of the apex 61 of the curved surface to a position rearward of the apex 61, and include a certain width in the machine body width direction K2.

In the present example embodiment, the front surface 28b and the rear surface 28c of the armrest 28 each have a flat surface, but this does not imply any limitations. The front surface 28b and the rear surface 28c may be curved surfaces extending from the resting surface 28d.

As shown in FIG. 4A, the left and right side surfaces 28e each have a flat surface including the side edge 28a3 of the bottom surface 28a as a bottom edge, a side edge 28b2 of the front surface 28b as a front edge, a side edge 28c2 of the rear surface 28c as a rear edge, and a side edge 28d3 of the top surface 28d as a top edge.

The armrest 28 includes, but is not limited thereto, a material having cushioning characteristics in at least an upper portion thereof.

In the case where the user 57 grips the grip 34 of one of the operation actuators 27 and pivots the operation actuator 27 in the front-rear direction K1 with the forearm 58 rested on the armrest 28, it is possible for the user 57, by operating the operation actuator 27 with the forearm 58 pressed against the armrest 28, to stably operate the operation actuator 27 even when, for example, the machine body 10 shakes.

In the case of precise operation of the operation actuator 27, the user grips the lower portion of the grip 34 to operate the operation actuator 27 in many cases. When the user grips the lower portion of the grip 34 to operate the operation actuator 27, the pivoting stroke (operation stroke) of the operation actuator 27 is small, and a large force is required to operate the operation actuator 27. When pivoting stroke (operation stroke) of the operation actuator 27 is small, it is easy to move (precisely operate) the operation actuator 27 using fingers and/or the like, and, when a large force is required to operate the operation actuator 27, vibrations of the machine body 10 are unlikely to affect the operation, and therefore the user grips the lower portion of the grip 34 in many cases in the case of precise operation of the operation actuator 27.

In the case where the user grips the lower portion of the grip 34 and pivots the operation actuator 27 in the front-rear direction K1, the movement (pivot) of the wrist 59 alone would be not sufficient to move the operation actuator 27 in the front-rear direction with the forearm 58 pressed against the armrest 28, and, in the related art, the user operates the operation actuator 27 while sliding and moving the forearm 58 on the armrest 28 along the front-rear direction K1. Thus, in the related art, it is difficult to pivot the operation actuator 27 while sufficiently pressing the forearm 58 against the armrest 28. Furthermore, it is difficult for the user 57 to cause the forearm 58 to slide when the bare skin of the forearm 58 is in direct contact with the armrest 28, and therefore the user 57 needs to slightly lift the forearm 58 from the armrest 28 and move the forearm 58.

In the present example embodiment, the resting surface 28d for the forearm 58 of the user 57 is to be rested on is a curved surface that is curved to be convex upward in a side view of the armrest 28 and is continuous from a position forward of an apex 61 of the curved surface to a position backward of the apex 61. The curved surface of the resting surface 28d is configured such that a contact portion (fulcrum of the forearm 58 during operation) 63 between the forearm 58 and the resting surface 28d is allowed to move without sliding movement between the forearm 58 and the resting surface 28d (the position of the contact portion 63 on the resting surface 28d changes) when the user 57 grips the operation actuator 27 and pivots the operation actuator 27 in the front-rear direction K1 with the forearm 58 rested on the resting surface 28d. Accordingly, the user 57 can move the forearm 58 without sliding movement on the resting surface 28d (cause the forearm 58 to be displaced) when pivoting the operation actuator 27 in the front-rear direction K1. Specifically, when the user 57 pivots the operation actuator 27 in the front-rear direction K1, the user 57 can cause the contact portion 63 between the forearm 58 and the curved resting surface 28d to move without sliding movement on the curved resting surface 28d (as if it rolls on the resting surface 28d) by changing the inclination of the forearm 58.

When the user 57 pivots the operation actuator 27 in the front-rear direction K1, the user 57 can cause the forearm 58 to move without sliding movement on the resting surface 28d (cause the forearm 58 to move in rolling contact with the resting surface 28d), and therefore it is possible for the user 57 to pivot the operation actuator 27 while sufficiently pressing the forearm 58 against the armrest 28 (resting surface 28d). It is in turn possible to stably operate the operation actuator 27.

FIGS. 8 to 11 each illustrate the user 57 gripping the lower portion (base portion, proximal portion) of the grip 34 and pivoting the operation actuator 27 in the front-rear direction K1 with the forearm 58 rested on the resting surface 28d (armrest 28). Usually, the user 57 grips the grip 34 with their thumb 64a of a hand 64 located higher than their little finger 64b.

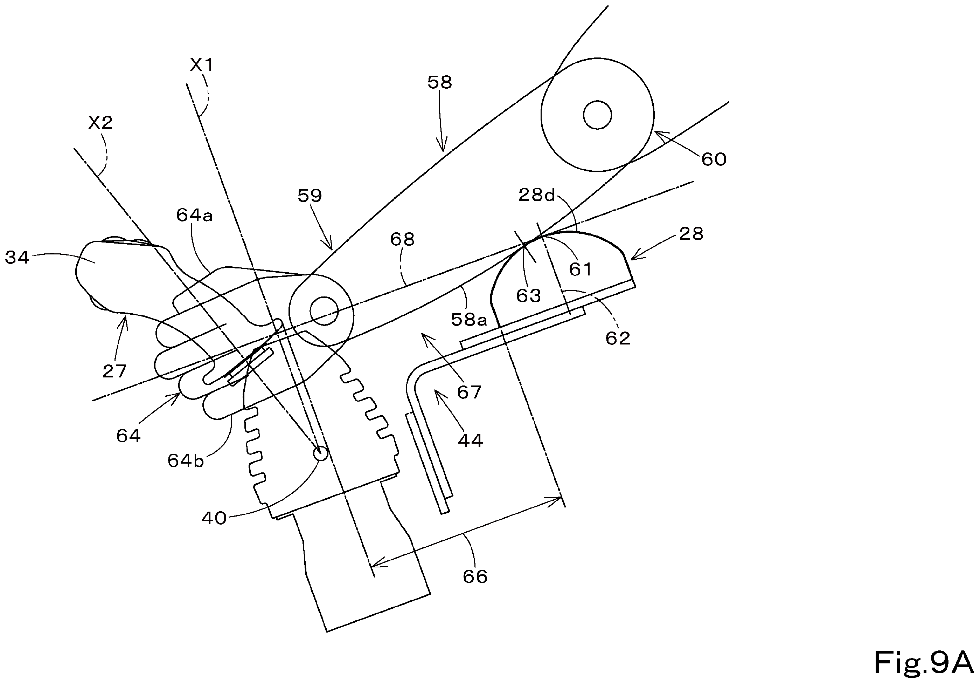

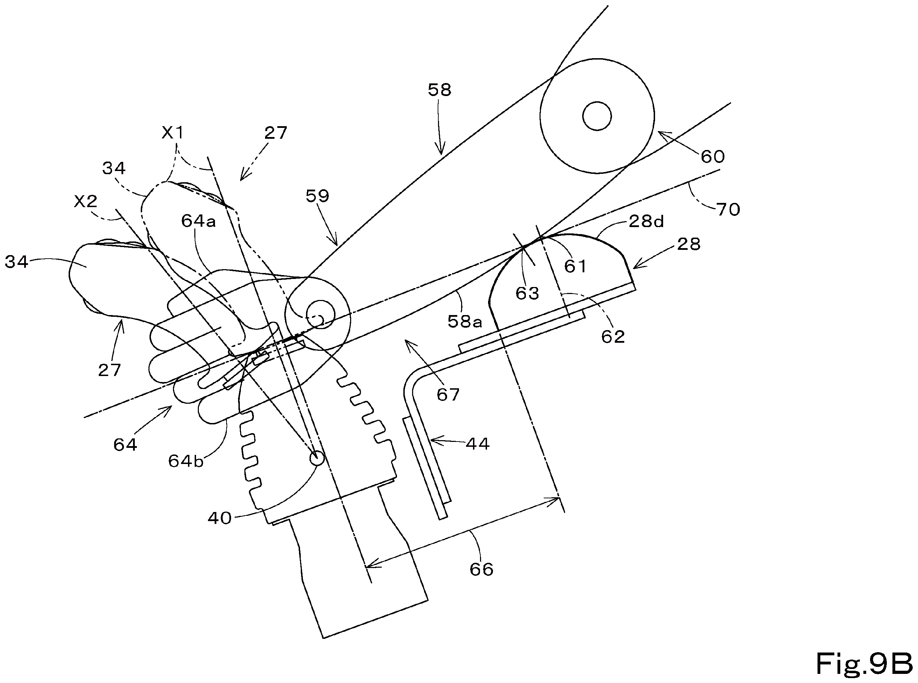

FIG. 8 is a side view illustrating the operation actuator 27 pushed (pivoted forward from the neutral position X1) by the user 57 sitting in the seat 18. FIGS. 9A and 9B are each an enlarged side view of the operation actuator 27, the armrest 28, the forearm 58 and the like when the operation actuator 27 is pushed.

In the first example embodiment, as shown in FIGS. 9A and 9B, when the operation actuator 27 is pushed, a portion including an elbow 60 of the forearm 58 (a portion between the elbow 60 and the lengthwise center of the forearm 58) is in contact with the resting surface 28d, and the contact portion 63 between the forearm 58 and the resting surface 28d is located slightly forward of the apex 61 of the resting surface 28d. The forearm 58 is inclined diagonally downward and forward, and a portion including the wrist 59 of the forearm 58 (a portion between the wrist 59 and the lengthwise center of the forearm 58) is at least partially located within a space 67 provided in an interval 66 between the grip 34 and the armrest 28. That is, in the present example embodiment, the space 67 is provided in the interval 66 between the grip 34 and the armrest 28 such that, when the user 57 grips the grip 34 and pivots the operation actuator 27 forward with the forearm 58 rested on the resting surface 28d, the forearm 58 is at least partially located within the space 67, i.e., at least located lower than at least one of a tangent 68 to the apex 61 (see FIG. 9A) or a straight line 70 connecting a bottom end of the grip 34 and the apex 61 of the resting surface 28d (see FIG. 9B). Note that as shown in FIG. 9B, the straight line 70 is a line connecting the bottom end of the grip 34 in the neutral position X1 and the apex 61 of the resting surface 28d.

It is possible for the user, when the user grips the lower portion of the grip 34 and pivots the operation actuator 27 forward with the forearm 58 rested on the resting surface 28d, to position the portion including the wrist 59 of the forearm 58 at least partially in the space 67 in the interval 66 between the grip 34 and the armrest 28, and thus possible to push the operation actuator 27 while changing the inclination of the forearm 58 and smoothly operate the operation actuator 27. Since it is possible to push the operation actuator 27 while changing the inclination of the forearm 58, it is possible for the user, when pivoting the operation actuator 27 forward, to move the forearm 58 without sliding movement on the resting surface 28d while sufficiently pressing the forearm 58 against the resting surface 28d.

As shown in FIGS. 9A and 9B, in the present example embodiment, when the user grips and pushes the lower portion of the grip 34, the portion including the wrist 59 of the forearm 58 is at least partially located lower than the tangent 68 (see FIG. 9A) to the apex 61 of the resting surface 28d and the straight line 70 (see FIG. 9B) connecting the bottom end of the grip 34 and the apex 61 of the resting surface 28d. If the top surface of the armrest is a flat surface as in the related art, the height position of the flat surface is at the position of the tangent 68, and therefore it is not possible to cause the portion including the wrist 59 of the forearm 58 to be located lower than the top surface of the armrest. Thus, in the related art, when the user pushes the operation actuator 27, the user needs to move the forearm 58 forward while sliding the forearm 58 on the top surface of the armrest while pivoting the operation actuator 27.

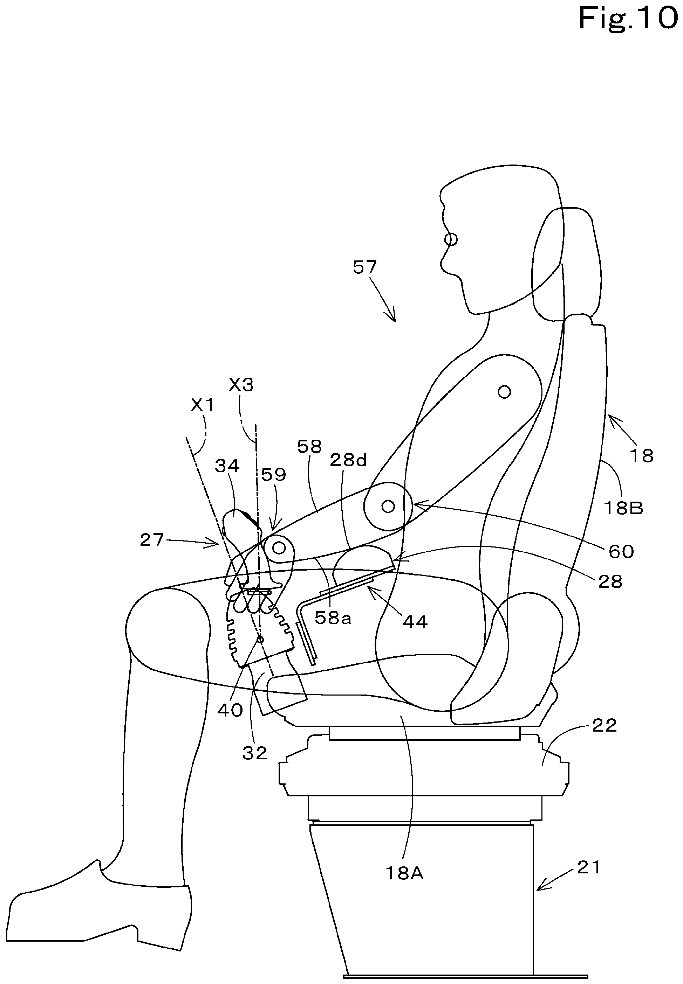

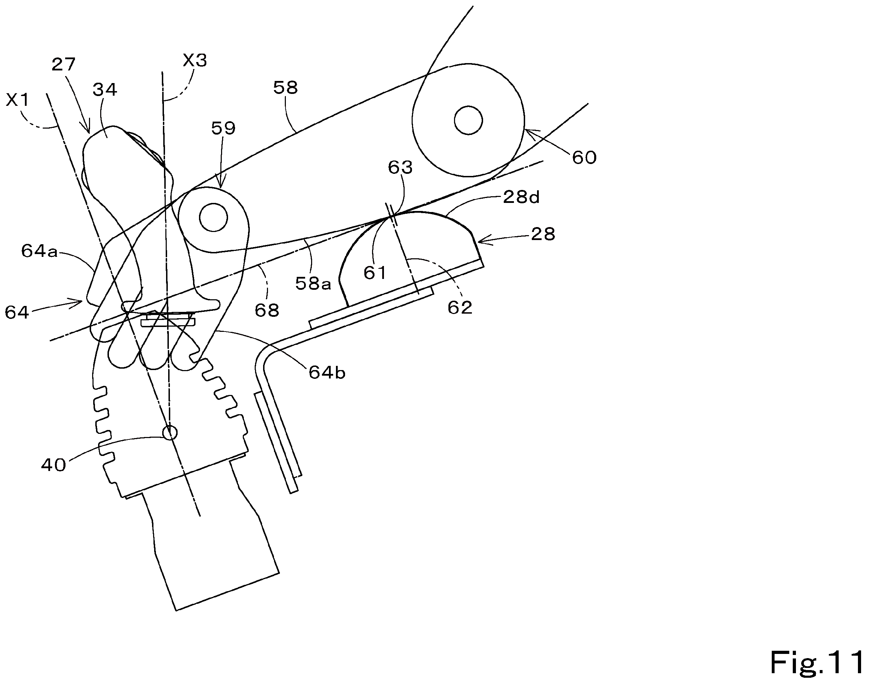

FIG. 10 is a side view showing the operation actuator 27 pulled (when the operation actuator 27 is pivoted rearward from the neutral position X1) by the user 57 sitting in the seat 18. FIG. 11 is an enlarged side view of the operation actuator 27, the armrest 28, the forearm 58 and the like when the operation actuator 27 is pulled.

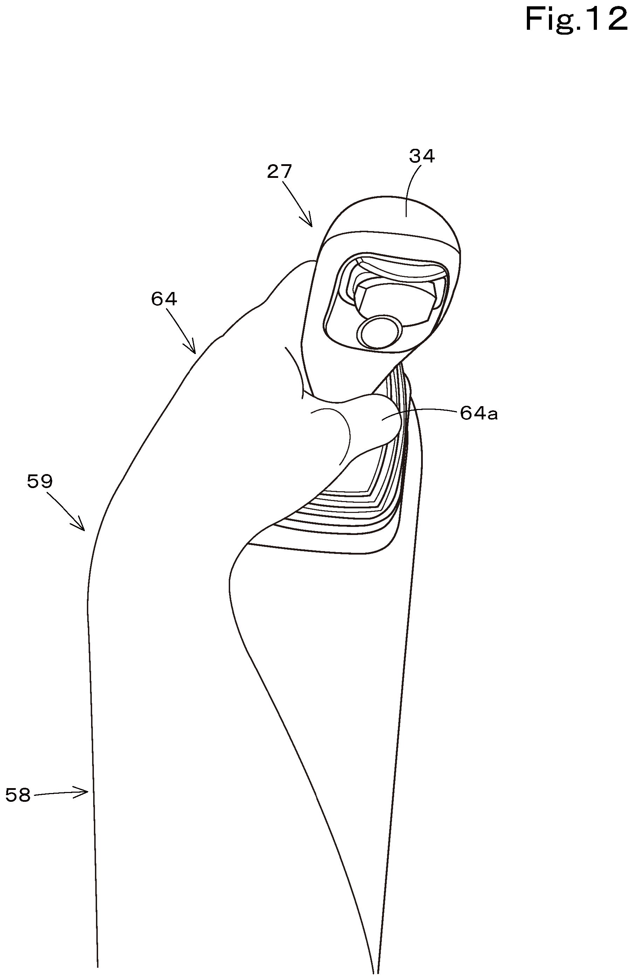

When the user pulls the operation actuator 27, the user sometimes rotates the hand 64 in the direction toward the small finger 64d (pivots the hand 64 in the direction of ulnar flexion) and bends the wrist 59 such that the wrist 59 is convex outward in the machine body width direction K2 (see FIG. 12).

As shown in FIG. 11, when the operation actuator 27 is pulled, the portion including the elbow 60 of the forearm 58 is in contact with the resting surface 28d, and the contact portion 63 between the forearm 58 and the resting surface 28d is located slightly rearward of the apex 61 of the resting surface 28d. Furthermore, the forearm 58 is located higher than when the operation actuator 27 is pushed, and the portion including the wrist 59 of the forearm 58 is located higher than the tangent 68.

It is possible, also when the user pulls the operation actuator 27, to pull the operation actuator 27 while changing the inclination of the forearm 58. Since it is possible to pull the operation actuator 27 while changing the inclination of the forearm 58, it is possible for the user, when pivoting the operation actuator 27 rearward, to move the forearm 58 without sliding movement on the resting surface 28d while sufficiently pressing the forearm 58 against the resting surface 28d.

In the first example embodiment, it is possible, when pivoting the operation actuator 27 in the front-rear direction K1, to achieve the full stroke of the operation actuator 27 by the portion including the elbow 60 of the forearm 58 smoothly moving on the resting surface 28d. This makes it possible to reduce the space required for the hand 64 and the forearm 58 (arm) to move to operate the operation actuator 27.

Furthermore, since the contact portion 63 of the forearm 58 moves on a curved surface convex upward when the operation actuator 27 is pivoted in the front-rear direction K1, it is possible to make the armrest 28 compact (reduce the size of the armrest 28). This results in additional space for other components such as switches.

In the case where the user pivots the operation actuator 27 in the machine body width direction K2 (left-right direction), the user does so while fixedly pressing the forearm 58 against the armrest 28. In this regard, since it is possible for the user, when pivoting the operation actuator 27 in the front-rear direction K1 (forward or rearward), to operate the operation actuator 27 while pressing the forearm 58 against the armrest 28, it is possible for the user to, when pivoting the operation actuator 27 in the front-rear direction and in the left-right direction (when performing a combined operation of two to-be-controlled objects concurrently), accurately perform the combined operation (concurrent operation) of the two to-be-controlled objects. Furthermore, since it is possible for the user, both when pivoting the operation actuator 27 in the front-rear direction and when pivoting the operation actuator 27 in the left-right direction, to do so while pressing the forearm 58 against the armrest 28, it is possible to reduce the operation fatigue resulting from various operations of the operation actuator 27.

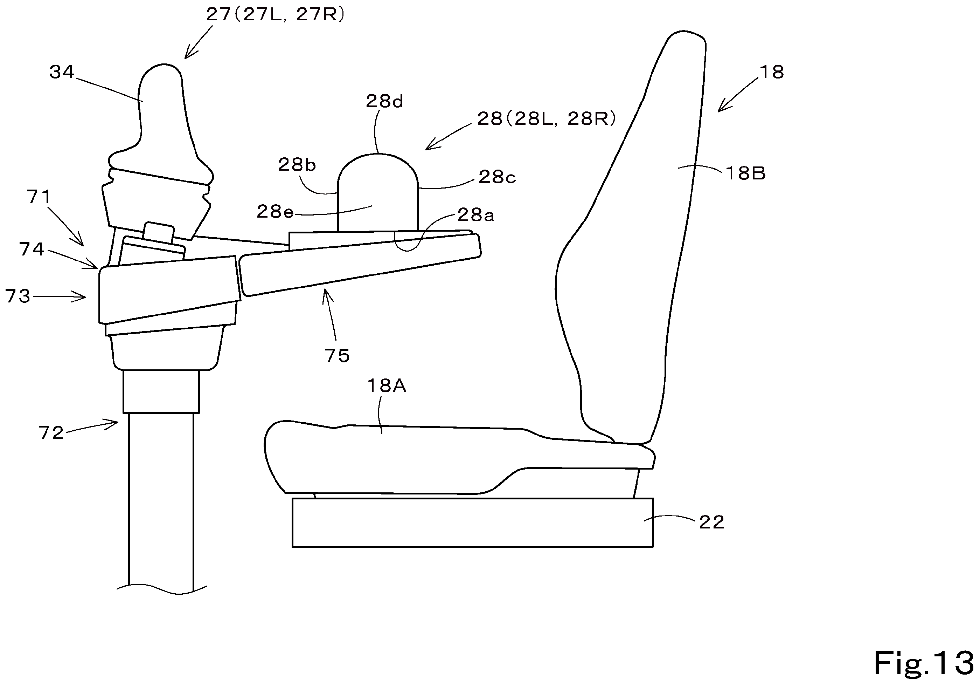

FIGS. 13 to 36 illustrate a second example embodiment.

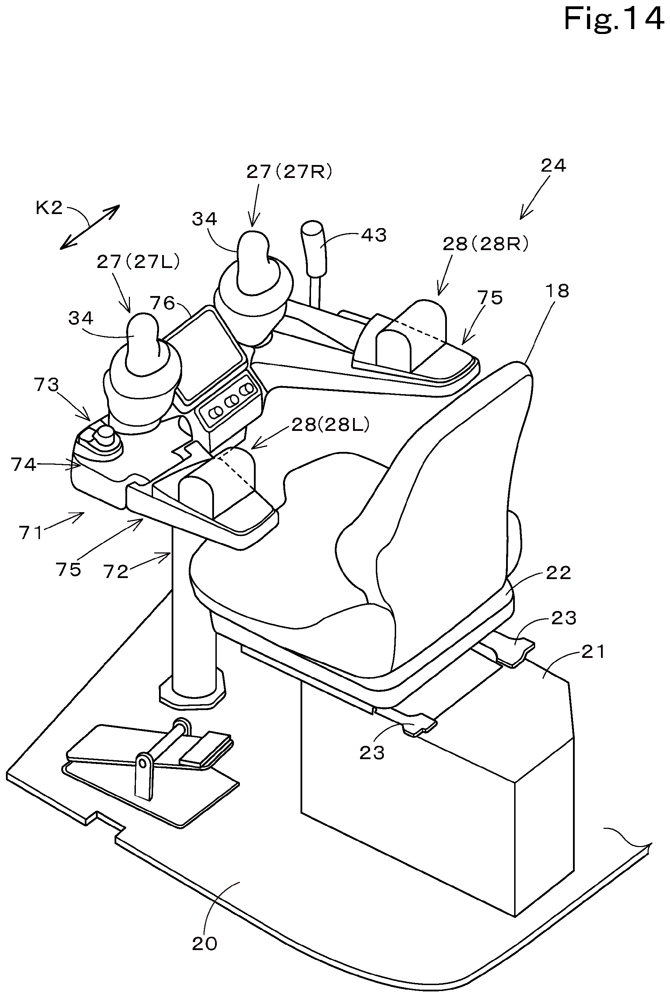

As shown in FIGS. 13 and 14, the operation portion 24 in the second example embodiment differs in configuration from that of the first example embodiment. As shown in FIG. 13, the operation actuators 27 are located forward of the seat 18 in the vicinity of the seat 18. As shown in FIG. 14, a left and right pair of the operation actuators 27 arranged in the machine body width direction K2 at positions forward of the seat 18.

As shown in FIG. 14, in the second example embodiment, the seat 18 is supported via the seat base 21 and the like on the floor 20 which defines the upper portion of the machine body 10 or the bottom portion of the cabin 12. In the second example embodiment, the seat base 21 is provided on the floor 20, the seat support 22 is provided such that the position thereof in the front-rear direction K1 is adjustable via the pair of slide rails 23 on the seat base 21, and the seat 18 is provided on the seat support 22.

As shown in FIG. 14, the pair of operation actuators 27 are provided on an operation platform 71 located forward of the seat 18. The operation platform 71 includes a support 72 and an operation platform main body 73. The support 72 is located forward of the center in the machine body width direction K2 of the seat 18 and provided upright on the floor 20 (machine body 10). The operation platform main body 73 is provided at an upper portion of the support 72. The center in the machine body width direction K2 of the operation platform main body 73 and the center in the machine body width direction K2 of the seat 18 coincide or substantially coincide with each other.

As shown in FIGS. 14, 16 and 17, the operation platform main body 73 includes a mount base 74 elongated in the machine body width direction K2, and a pair of left and right support bases 75 extending rearward from a left portion and a right portion of the mount base 74. The left and right support bases 75 are configured such that the space between the left and right support bases 75 in the machine body width direction K2 gradually increases in a rearward direction. In other words, the pair of support bases 75 are inclined, with decreasing distance to the rear thereof, such that each of the pair of support bases 75 is inclined in a direction away from the other of the pair of support bases 75 along the machine body width direction K2 with increasing distance from the midpoint between the pair of support bases 75 in the machine body width direction K2.

As shown in FIG. 14, the pair of (left and right) operation actuators 27 are located on the mount base 74 and are arranged in the machine body width direction K2. Specifically, one (left) of the operation actuators 27 (one (left) operation actuator 27L) is offset to one of opposite sides from (is located leftward of) the center of the mount base 74 (seat 18) in the machine body width direction K2. The other (right) of the operation actuators 27 (other (right) operation actuator 27R) is offset to the other of the opposite sides from (is located rightward of) the center of the mount base 74 in the machine body width direction K2. A monitor 76 is provided on the mount base 74 between the left and right operation actuators 27.

In the present second example embodiment, the user 57 sitting in the seat 18 grips the operation actuators 27 with their upper body tilting forward and their elbows 60 protruding outward such that the distance between their left and right forearms 58 gradually increases in the rearward direction.

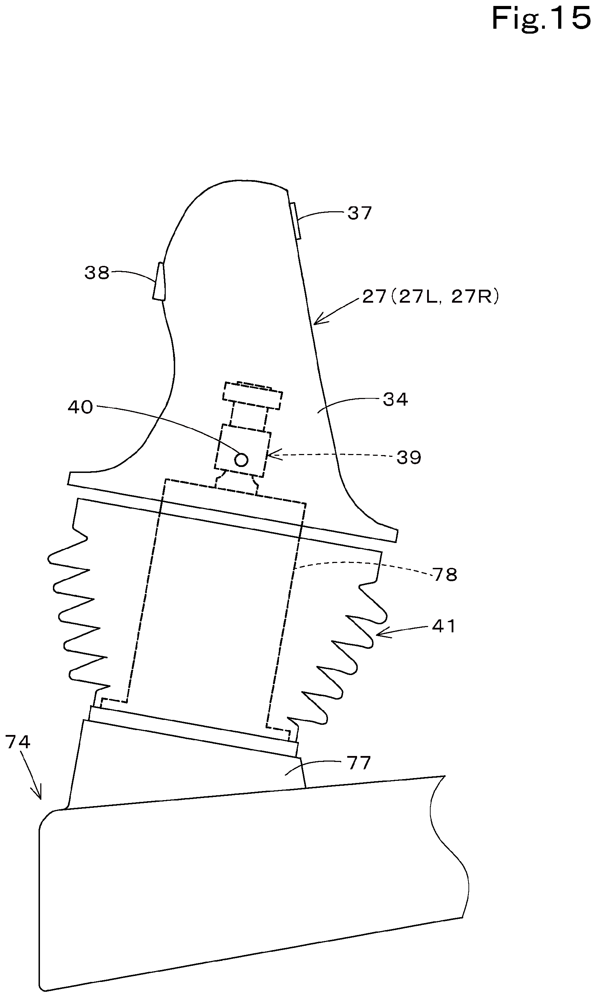

As shown in FIG. 15, the mount base 74 includes a mount portion 77 provided at the position where the corresponding operation actuator 27 is provided. A base 78 is attached to the mount portion 77. The operation actuator 27 is connected to the base 78 via a joint structure (such as a universal joint) 39 such that the operation actuator 27 is pivotable about the pivot center 40. The operation actuator 27 is configured to, after being operated, be returned from the operated position to the original neutral position by a neutral position return mechanism (not illustrated).

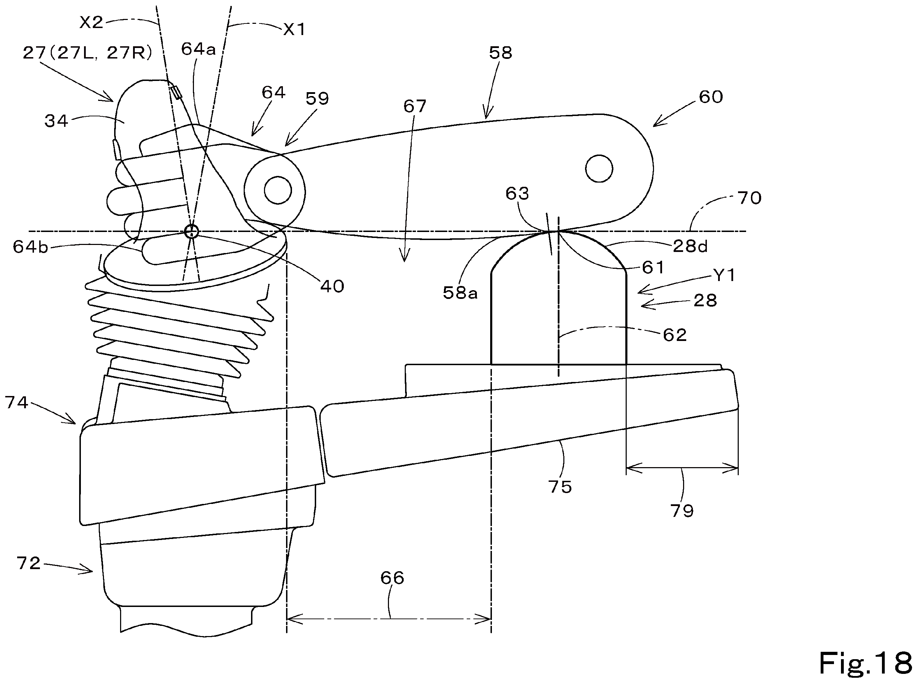

Each operation actuator 27 includes a hollow grip 34 including an opening at a bottom thereof. As shown in FIG. 15, the joint structure 39 is provided inside the grip 34. That is, in the second example embodiment, the pivot center 40 is located inside the grip 34. As shown in FIG. 18, the user 57 usually grips the grip 34 such that the thumb 64a of the hand 64 is located higher than the little finger 64b and the pivot center 40 is located at the inner side of the palm of the hand 64.

Also in the second example embodiment, the operation actuator 27 is pivotable about the pivot center 40 at least in the front-rear direction K1. Specifically, the operation actuator 27 is pivotable about the pivot center 40 in the front-rear direction K1 and the machine body width direction K2 (forward, rearward, leftward and rightward). The operation actuator 27 is pivotable about the pivot center 40 also in diagonal directions between the front-rear direction K1 and the machine body width direction K2. The present example embodiment is the same as the first example embodiment also in that each operation actuator 27 is configured to control two to-be-controlled objects. The boot 41 covers the space between the grip 34 and the mount portion 77.

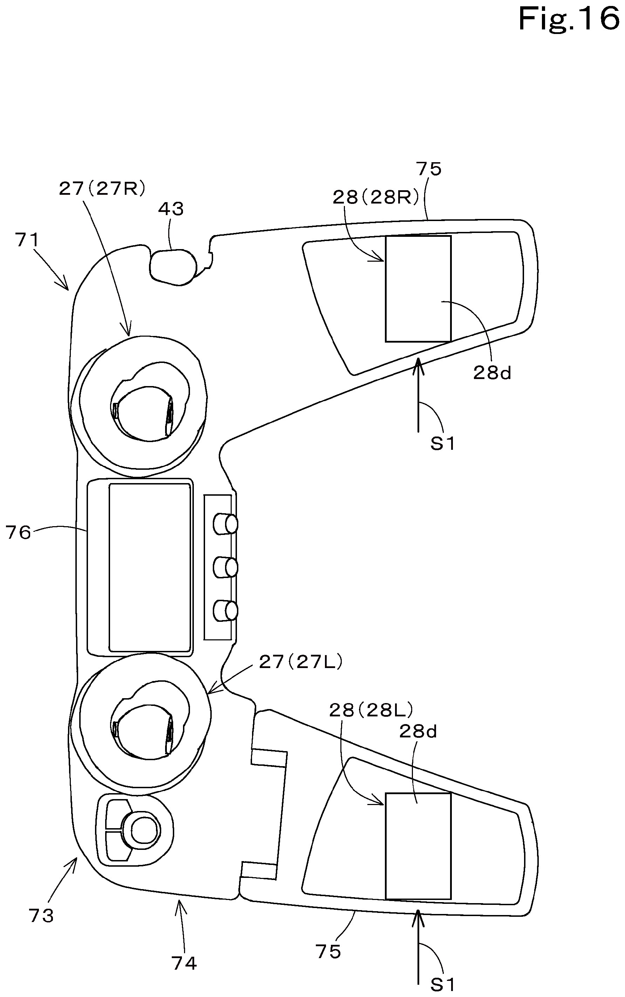

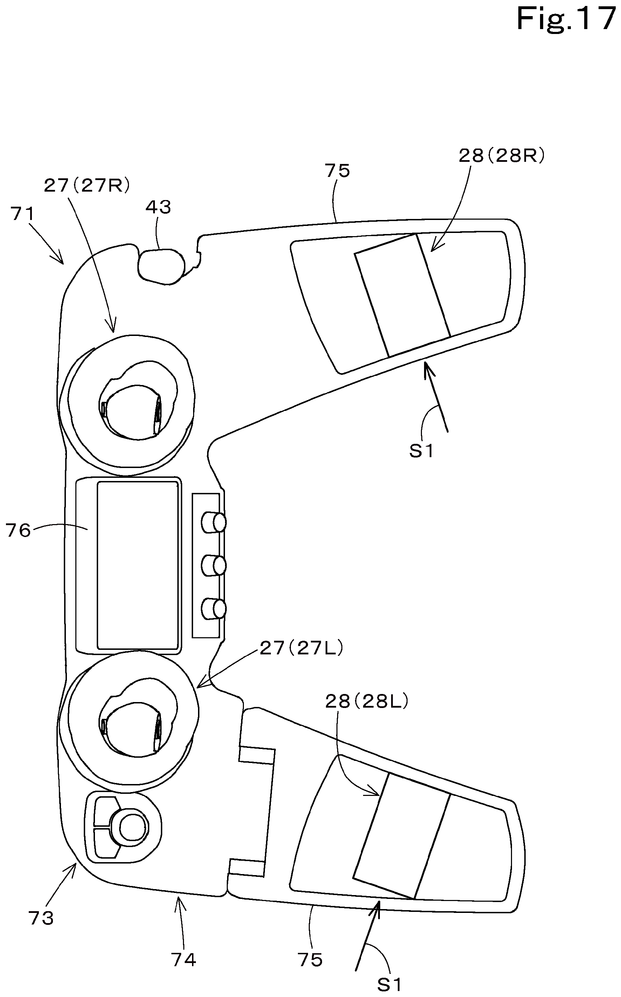

As shown in FIG. 14, the armrests 28 are located rearward of the respective pair of operation actuators 27 at a predetermined distance from the respective pair of operation actuators 27. Specifically, a pair of (left and right pair of) the armrests 28 are provided, and one of the armrests 28 is located rearward of one (left) operation actuator 27L and the other of the armrests 28 is located rearward of the other (right) operation actuator 27R. As shown in FIGS. 16 and 17, each of the pair of armrests 28 is displaced, in a direction away from the other of the pair of armrests 28, from the corresponding operation actuator 27 which is located on the same side of the midpoint of the pair of armrests 28 in the machine body width direction K2 as the armrest 28. Specifically, the left armrest 28L is displaced leftward from the left operation actuator 27L, and the right armrest 28R is displaced rightward from the right operation actuator 27R. This allows the forearms 58 of the user 57 to be favorably rested on the armrests 28 when the user 57 grips the operation actuators 27 with their upper body tilting forward and the elbows 60 protruding outward such that the distance between the left and right forearms 58 gradually increases in the rearward direction.

The pair of armrests 28 are, for example, as shown in FIG. 16, provided such that each armrest 28 extends along the machine body width direction K2. As shown in FIG. 17, the pair of armrests 28 may be inclined such that each of the pair of armrests 28 is inclined forward in a direction away from the other of the pair of armrests 28 along the machine body width direction K2 with increasing distance from the midpoint between the pair of armrests 28 in the machine body width direction K2. Specifically, the left armrest 28L may be inclined forward in the leftward direction, and the right armrest 28R may be inclined forward in the rightward direction.

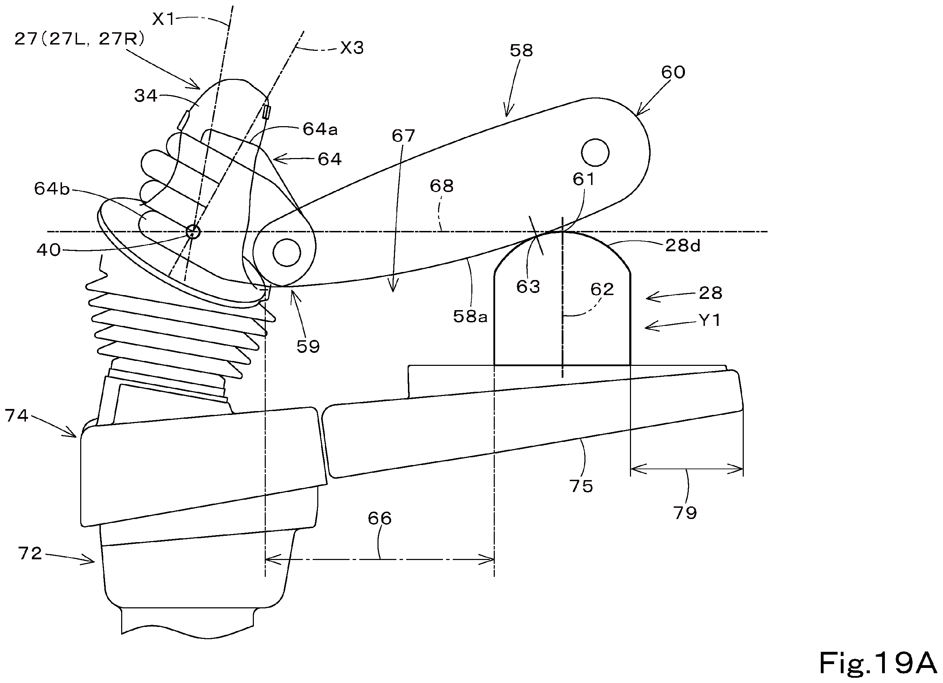

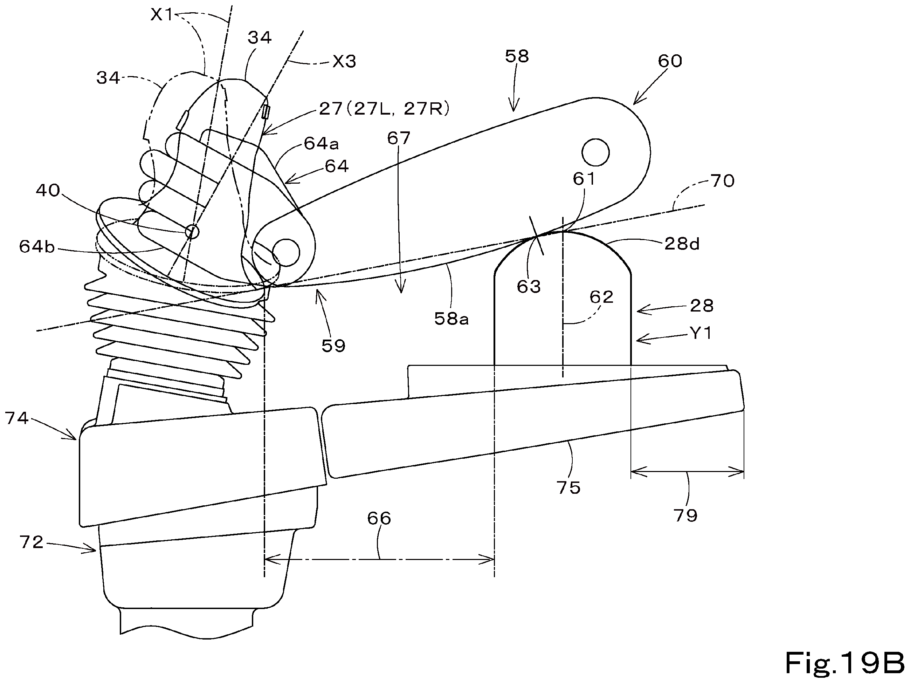

As shown in FIG. 13, each of the left and right armrests 28 is attached to the corresponding support base 75 provided on the same side of the machine body in the machine body width direction K2 as the armrest 28. In the present second example embodiment, each armrest 28 includes the bottom surface 28a facing downward, the front surface 28b facing forward, the rear surface 28c at the opposite side of the front surface 28b, the top surface 28d at the opposite side of the bottom surface 28a, and the left and right side surfaces 28e. As shown in FIGS. 18, 19A and 19B, the top surface 28d is the resting surface 28d for the forearm 58 of the user 57 sitting in the seat 18 to be rested on. The resting surface (top surface) 28d has a shape curved to be convex upward in a side view of the armrest 28 (as seen in the direction of arrow S1 in FIGS. 16 and 17). The resting surface 28d is similar to that of the first example embodiment, and therefore the description thereof is omitted. Advantageous effects achieved are similar to those of the first example embodiment, and therefore the description thereof is omitted.

FIGS. 18, 19A and 19B illustrate the user 57 gripping the grip 34 and pivots the operation actuator 27 in the front-rear direction K1 with their forearm 58 (specifically, the section 58a which is located on the outer side of the forearm 58 when the arm is bent) rested on the resting surface 28d (armrest 28). Specifically, FIG. 18 illustrates the operation actuator 27 when pushed. FIGS. 19A and 19B each illustrate the operation actuator 27 when pulled. In the embodiment shown in FIGS. 18 and 19A, the tangent 68 to the apex 61 of the resting surface 28d extends horizontally in the front-rear direction K1 and passes through the pivot center 40.

When the user 57 pushes the operation actuator 27 from the neutral position X1, the user 57 rotates the wrist 59 in the direction toward the little finger 64b (rotates the hand 64 in the direction of ulnar flexion). The contact portion 63 of the forearm 58 moves rearward on the armrest 28 (resting surface 28d). As shown in FIG. 18, when the operation actuator 27 is pushed, an intermediate portion of the forearm 58 is located slightly within the space 67 provided in the interval 66 between the grip 34 and the armrest 28. The contact portion 63 between the forearm 58 and the resting surface 28d is located slightly forward of the apex 61.

When the user 57 pulls the operation actuator 27 from the neutral position X1, the user 57 rotates the wrist 59 in the direction toward the thumb 64a (rotates the hand 64 in the direction of radial flexion) and inclines the forearm 58 downward. The contact portion 63 of the forearm 58 moves forward on the armrest 28 (resting surface 28d).

As shown in FIGS. 19A and 19B, when the operation actuator 27 is pulled, the forearm 58 (portion including the wrist 59 of the forearm 58) is at least partially located within the space 67 provided in the interval 66 between the grip 34 and the armrest 28. That is, the operation actuator 27 is configured such that a portion of the forearm 58 that is between (i) the wrist 59 and (ii) a portion of the forearm 58 that is rested on the armrest is at least partially located within the space 67 when the user 57 grips the grip 34 and pivots the operation actuator 27 rearward. Thus, in the present second example embodiment, the space 67 is provided in the interval 66 between the grip 34 and the armrest 28 such that, when the user 57 grips the grip 34 and pivots the operation actuator 27 rearward with the forearm 58 rested on the resting surface 28d, the forearm 58 is at least partially located within the space 67, i.e., at least partially located lower than at least one of the tangent 68 to the apex 61 (see FIG. 19A) or the straight line 70 connecting the bottom end of the grip 34 and the apex 61 of the resting surface 28d (see FIG. 19B). Note that, as shown in FIG. 19B, the above-described straight line 70 is a line connecting the bottom end of the grip 34 in the neutral position X1 and the apex 61 of the resting surface 28d.

The contact portion 63 between the forearm 58 and the resting surface 28d is located forward of the apex 61.

In the operation portion 24 of the second example embodiment, when, for example, no armrests 28 are provided, it is possible for the user to operate the operation actuators 27 with their elbows 60 on the support bases 75. In such a case, that is, when the user operates the operation actuators 27 with their elbows 60 on the support bases 75, the support bases 75 need to have a long dimension in the front-rear direction K1. In this regard, in the present example embodiment, a portion 79 of each support base 75 that extends rearward from the armrest 28 is not essential, making it possible to make the operation platform 71 compact.

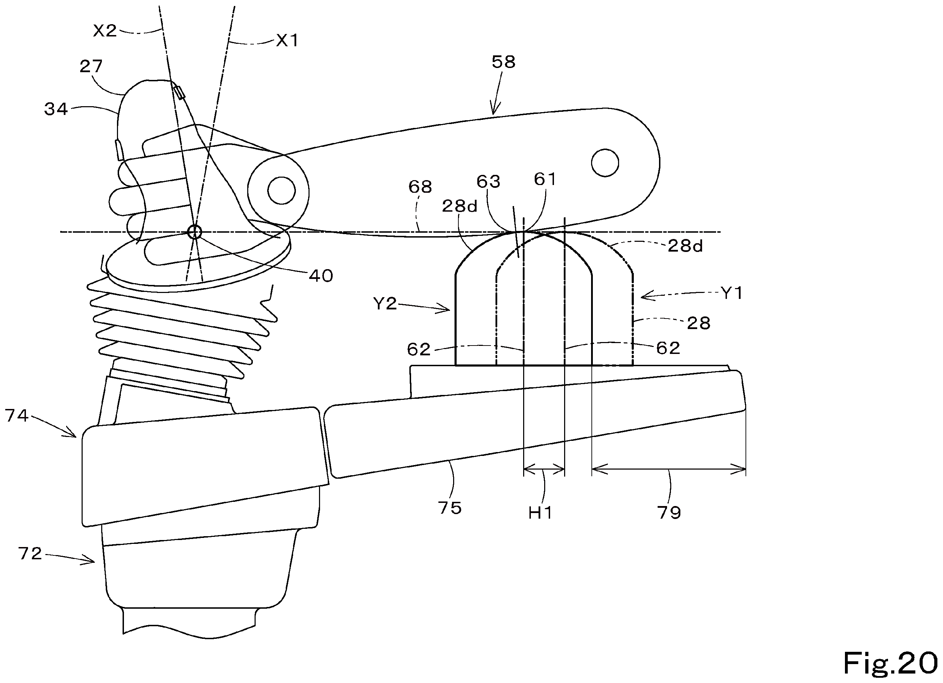

FIGS. 20 to 36 each illustrate a variation of the second example embodiment.

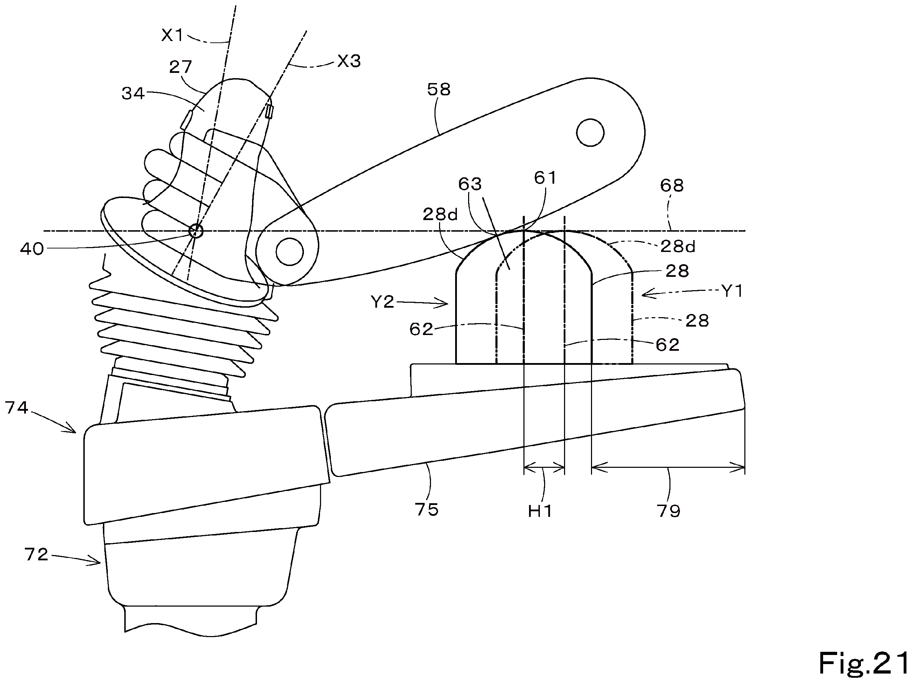

FIGS. 20 and 21 each illustrate a first variation. The first variation is a variation in which the armrest 28 is located at a position Y2 which is displaced by a predetermined distance H1 forward from a position Y1 of the armrest 28 of the basic example embodiment indicated in FIGS. 18, 19A and 19B. FIG.20 illustrates the operation actuator 27 when pushed, and FIG. 21 illustrates the operation actuator 27 when pulled.

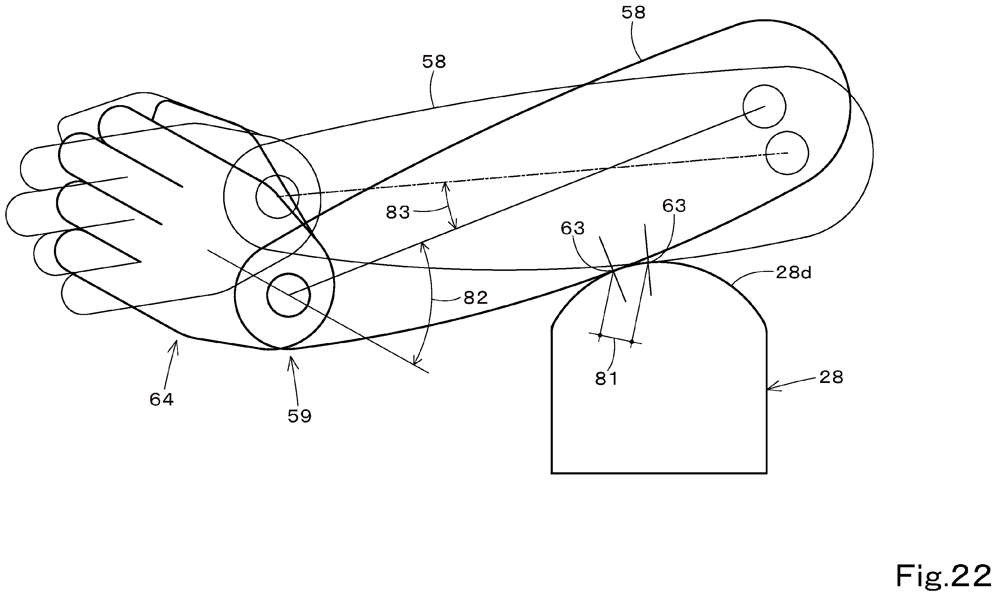

It is noted here that, in the following description, as shown in FIG. 22, the sign "81" indicates a contact-portion-movement amount which is the amount of movement of the contact portion 63 (the amount of change in position of the contact portion 63) on the resting surface 28d when the operation actuator 27 is pivoted in the front-rear direction K1, the sign "82" indicates a wrist angle which is the angle of the wrist 59 when the operation actuator 27 is pulled, and the term "forearm rotation angle 83" indicates the angle between the forearm 58 of pressing the operation actuator 27 and the forearm 58 pulling the operation actuator 27.

A comparison between the first variation with the basic embodiment shows that the contact-portion-movement amount (the amount of movement of the fulcrum of the forearm 58) 81, the wrist angle 82, and the forearm rotation angle 83 in the first variation are all greater than those in the basic example embodiment.

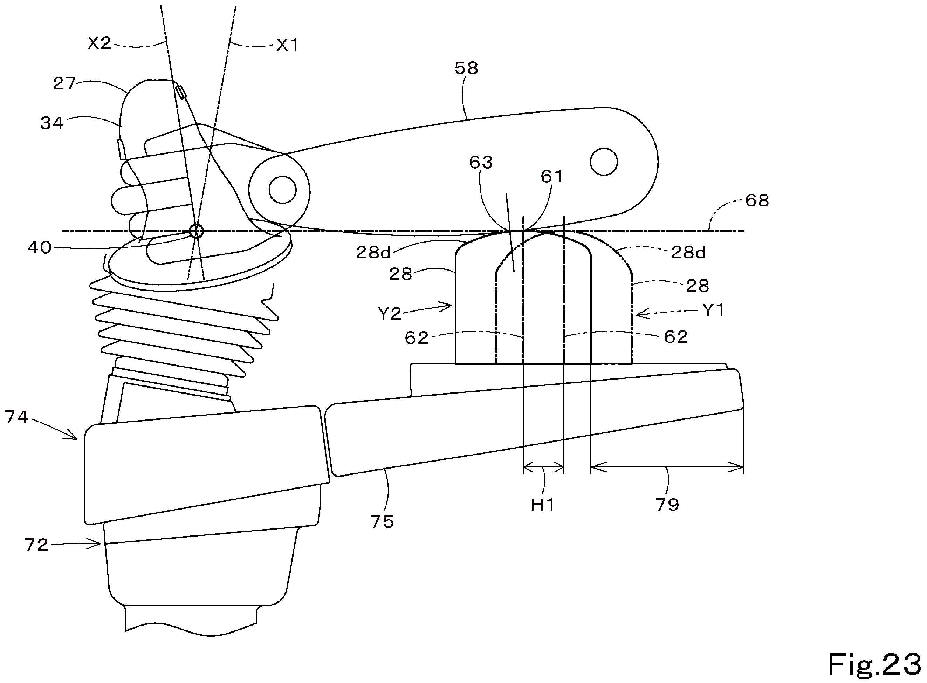

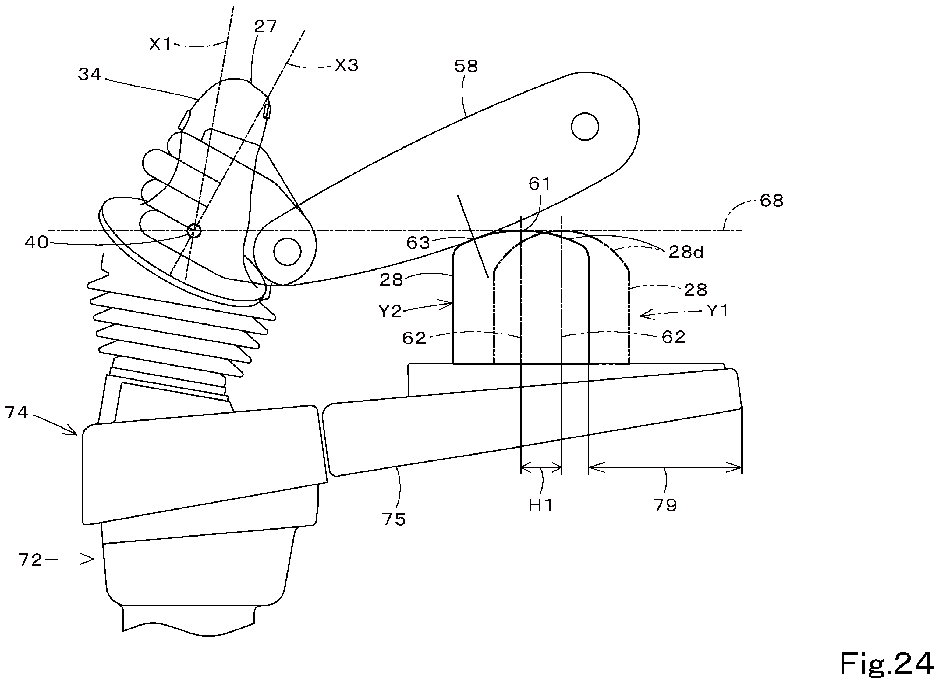

FIGS. 23 and 24 each illustrate a second variation. The second variation is a variation in which the armrest 28 is positioned at the position Y2 which is the same as that in the first variation and the curve of the curved surface of the resting surface 28d in the second variation has a larger radius than that of the armrest 28 in the first variation (basic example embodiment). FIG. 23 illustrates the operation actuator 27 when pushed, and FIG. 24 illustrates the operation actuator 27 when pulled.

A comparison between the second variation and the first variation shows that the contact-portion-movement amount 81, the wrist angle 82 and the forearm rotation angle 83 in the second variation are all greater than those in the first variation.

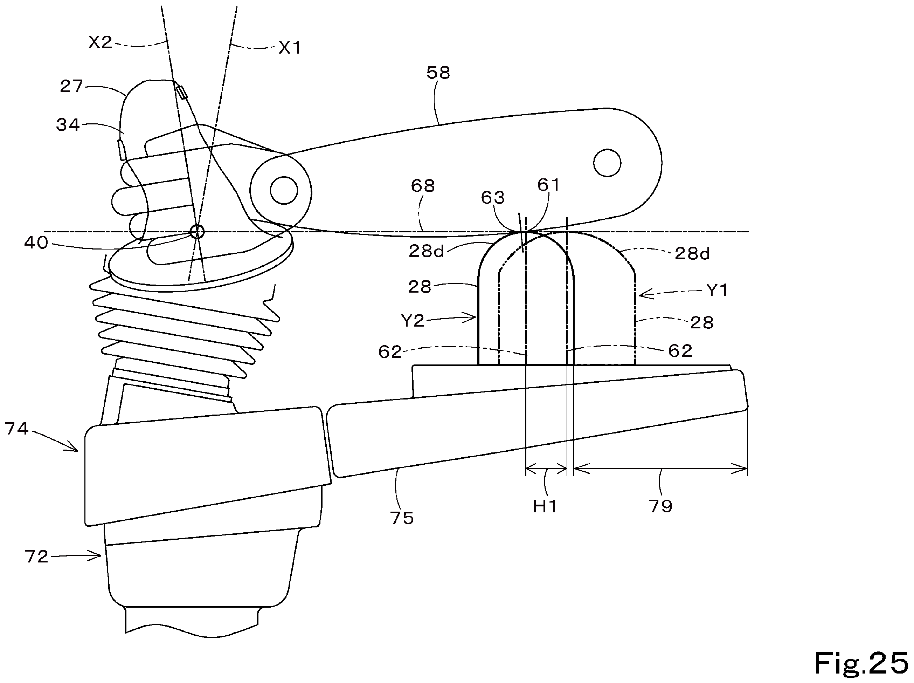

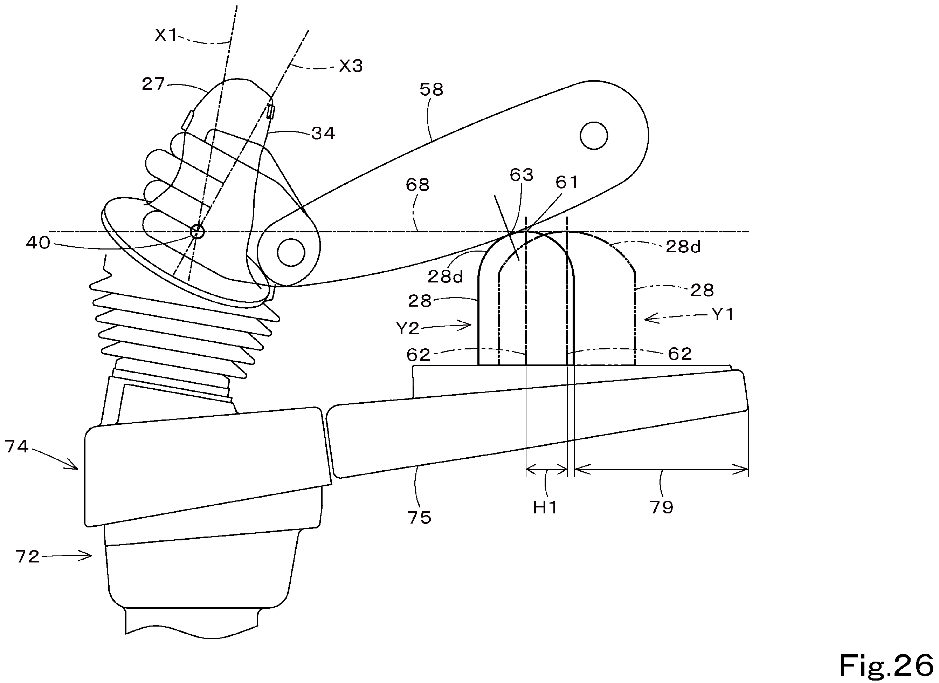

FIGS. 25 and 26 each illustrate a third variation. The third variation is a variation in which the armrest 28 is located at the position Y2 which is the same as that in the first variation and which is displaced forward by the predetermined distance H1 from the position Y1 of the armrest 28 of the basic example embodiment, and the curve of the curved surface of the resting surface 28d has a smaller radius than the armrest 28 of the first variation (basic example embodiment). FIG. 25 illustrates the operation actuator 27 when pushed and FIG. 26 illustrates the operation actuator 27 when pulled.

A comparison between the third variation and the first variation shows that the contact-portion-movement amount 81, the wrist angle 82 and the forearm rotation angle 83 of the second variation are all smaller than those of the first variation.

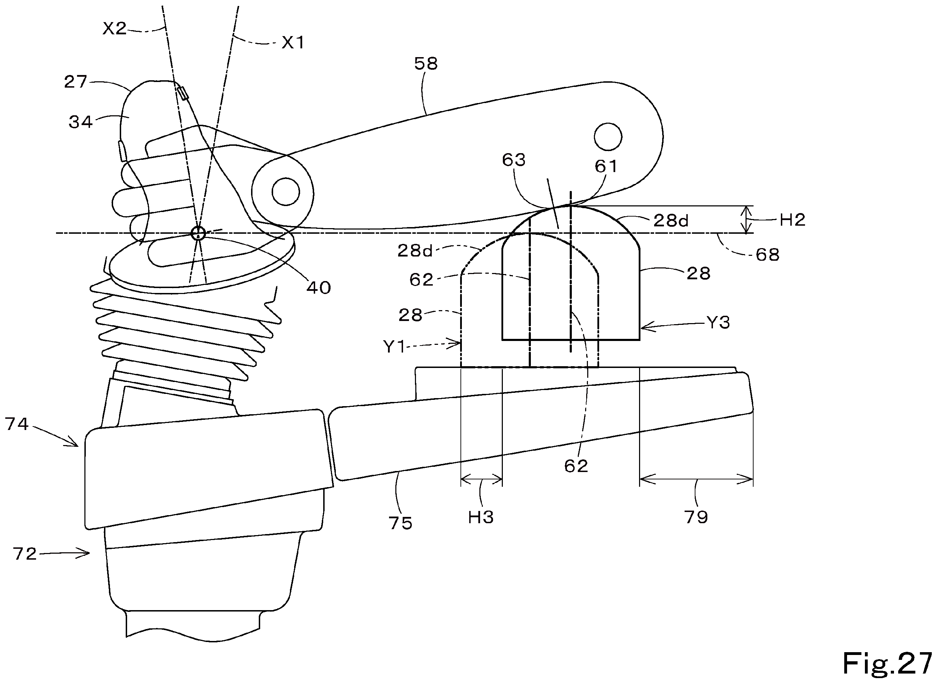

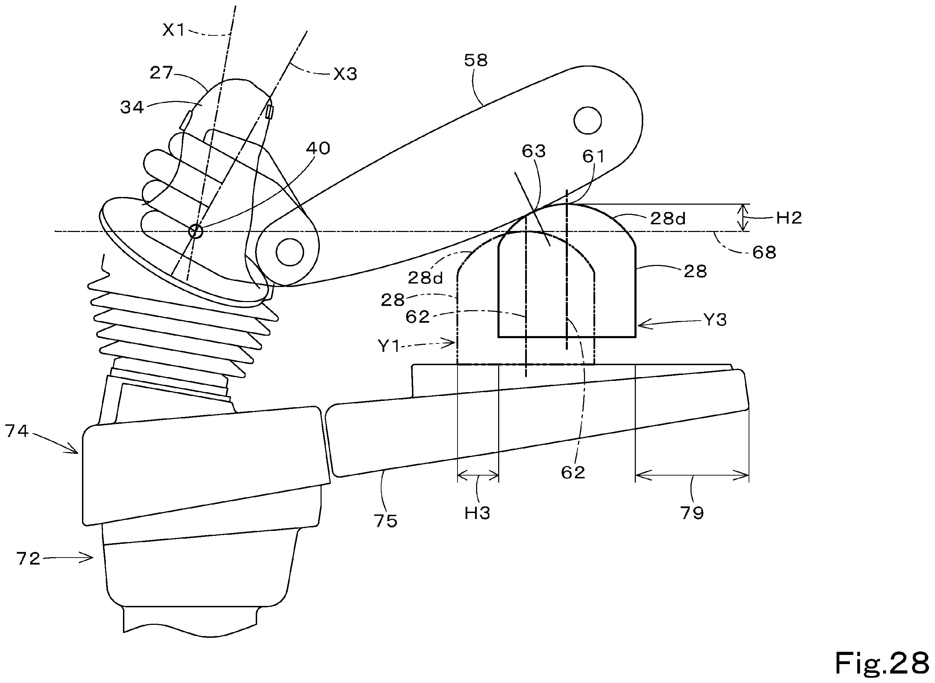

FIGS. 27 and 28 each illustrate a fourth variation. The fourth variation is a variation in which the armrest 28 is located at a position Y3 at which the resting surface 28d is displaced upward by a predetermined distance H2 and rearward along the front-rear direction K1 by a predetermined distance H3 from the position Y1 of the armrest 28 of the basic example embodiment. FIG. 27 illustrates the operation actuator 27 when pushed, and FIG. 28 illustrates the operation actuator 27 when pulled.

A comparison between the fourth variation and the basic example embodiment shows that, in the fourth variation, the contact-portion-movement amount 81 is greater than that in the basic example embodiment, the wrist angle 82 is greater than that in the basic example embodiment, and the forearm rotation angle 83 is substantially the same as that in the basic example embodiment.

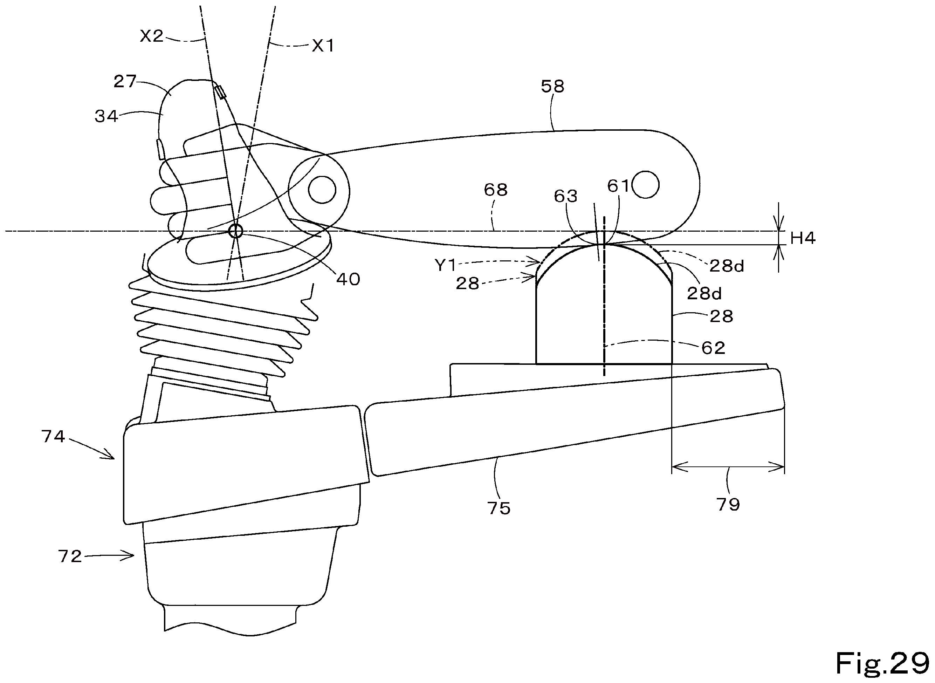

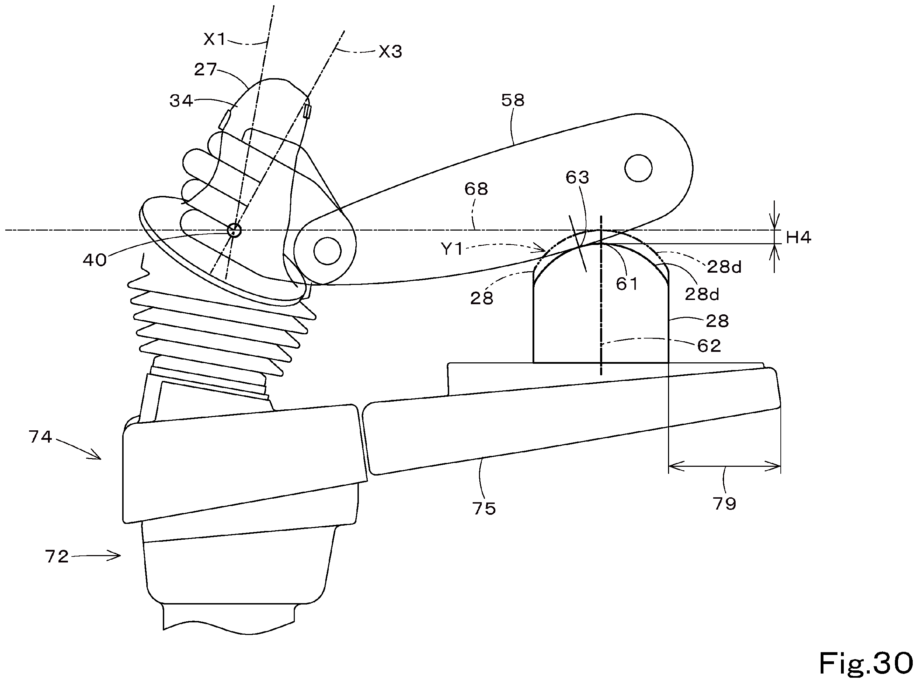

FIGS 29 and 30 each illustrate a fifth variation. The fifth variation is a variation in which the position of the armrest 28 in the front-rear direction K1 is the same as the position Y1 of the armrest 28 in the basic embodiment and the height of the resting surface 28d is lower by a predetermined distance H4 than that at the position Y1. FIGS. 29 illustrates the operation actuator 27 when pushed, and FIG. 30 illustrates the operation actuator 27 when pulled.

A comparison between the fifth variation and the basic example embodiment that, in the fifth variation, the contact-portion-movement amount 81 is greater than that in the basic example embodiment, the wrist angle 82 is smaller than that in the basic example embodiment, and the forearm rotation angle 83 is substantially the same as that in the basic example embodiment.

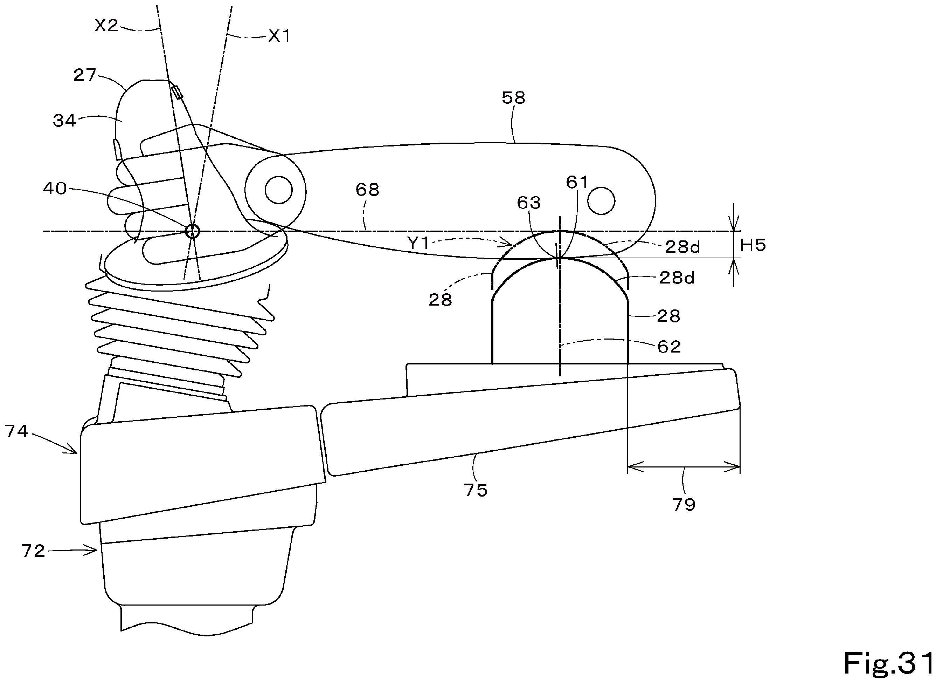

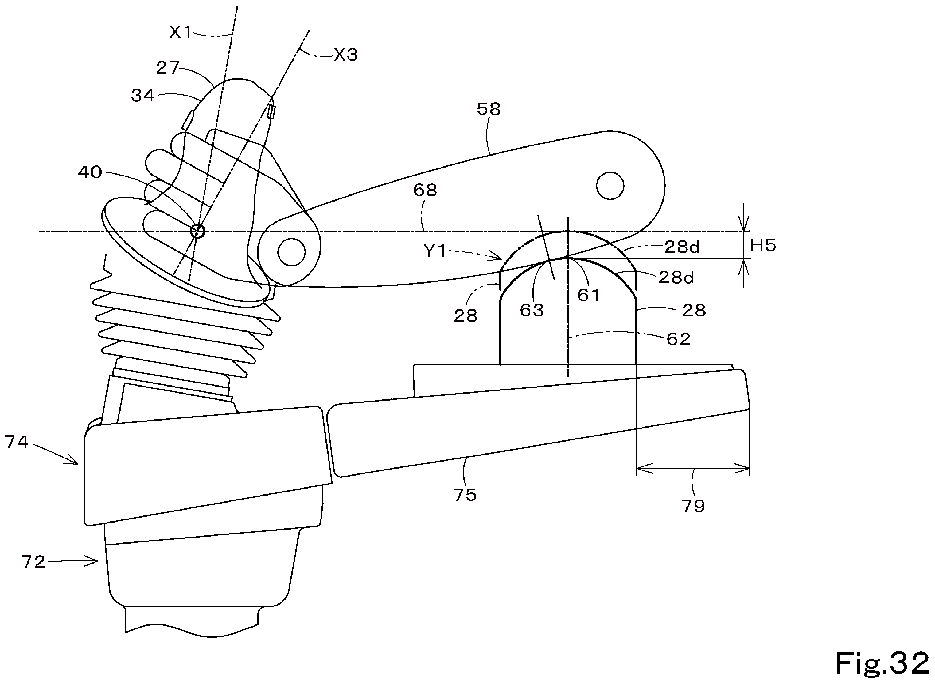

FIGS. 31 and 32 each illustrate a sixth variation. The sixth variation is a variation in which the height of the resting surface 28d is lower than that at the position Y1 of the armrest 28 in the basic embodiment by a distance H5 larger than that in the fifth variation. FIG. 31 illustrates the operation actuator 27 when pushed, and FIG. 32 illustrates the operation actuator 27 when pulled.

A comparison between the sixth variation and the fifth variation shows that, in the sixth variation, the contact-portion-movement amount 81 is greater than that in the fifth variation, the wrist angle 82 is smaller than that in the fifth variation, and the forearm rotation angle 83 is substantially the same as that in the fifth variation.

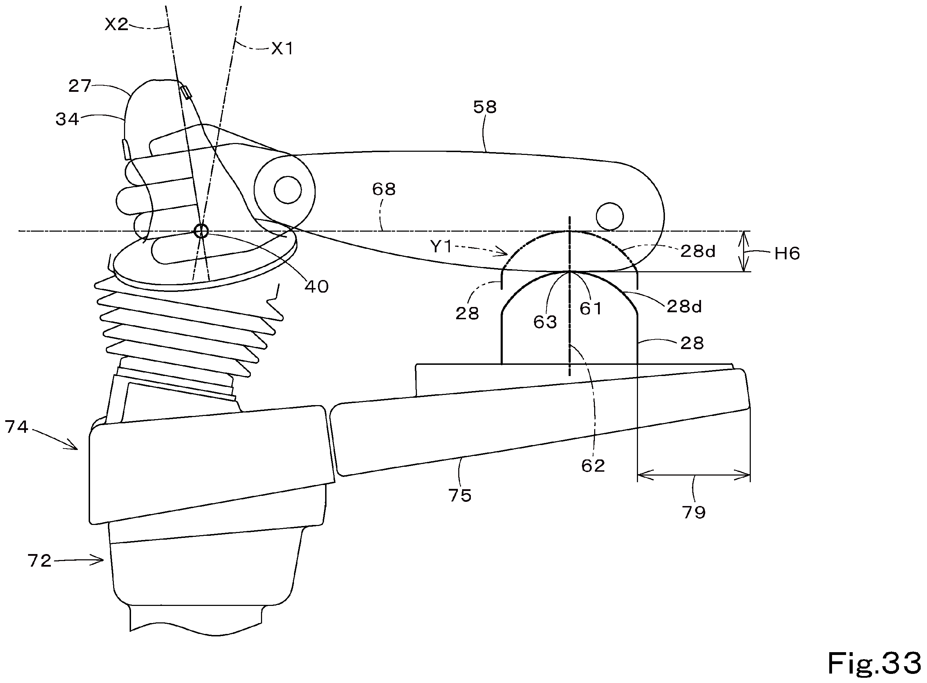

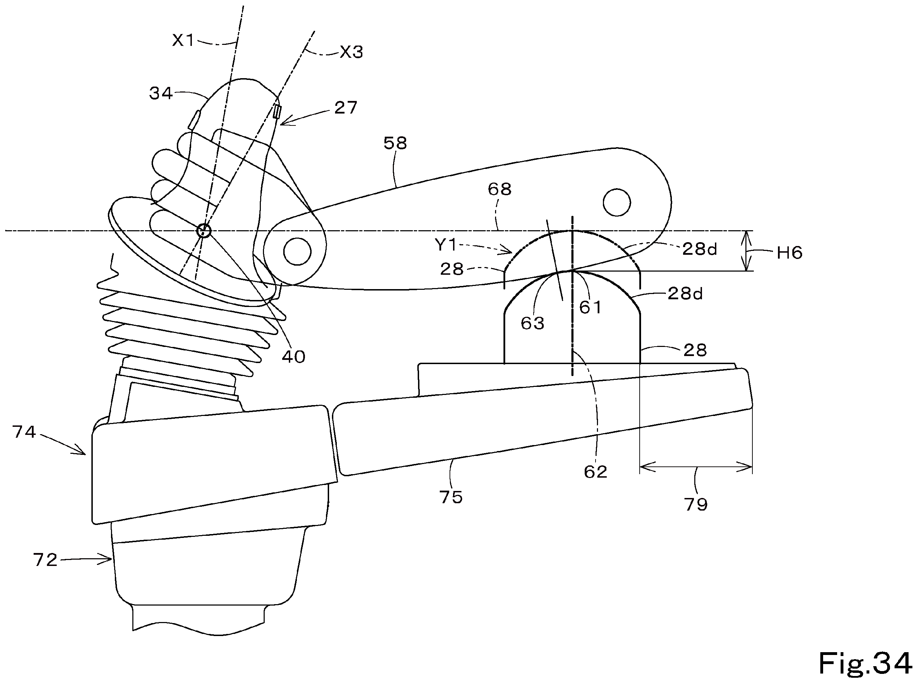

FIGS. 33 and 34 each illustrate a seventh variation. The seventh variation is a variation in which the height of the resting surface 28d is lower than that at the position Y1 of the armrest 28 in the basic example embodiment by a distance H6 larger than that in the sixth variation. FIG. 33 illustrates the operation actuator 27 when pushed, and FIG. 34 illustrates the operation actuator 27 when pulled.

A comparison between the seventh variation and the sixth variation shows that, in the seventh variation, the contact-portion-movement amount 81 is greater than that in the sixth variation, the wrist angle 82 is smaller than that in the sixth variation, and the forearm rotation angle 83 is substantially the same as that in the sixth variation.

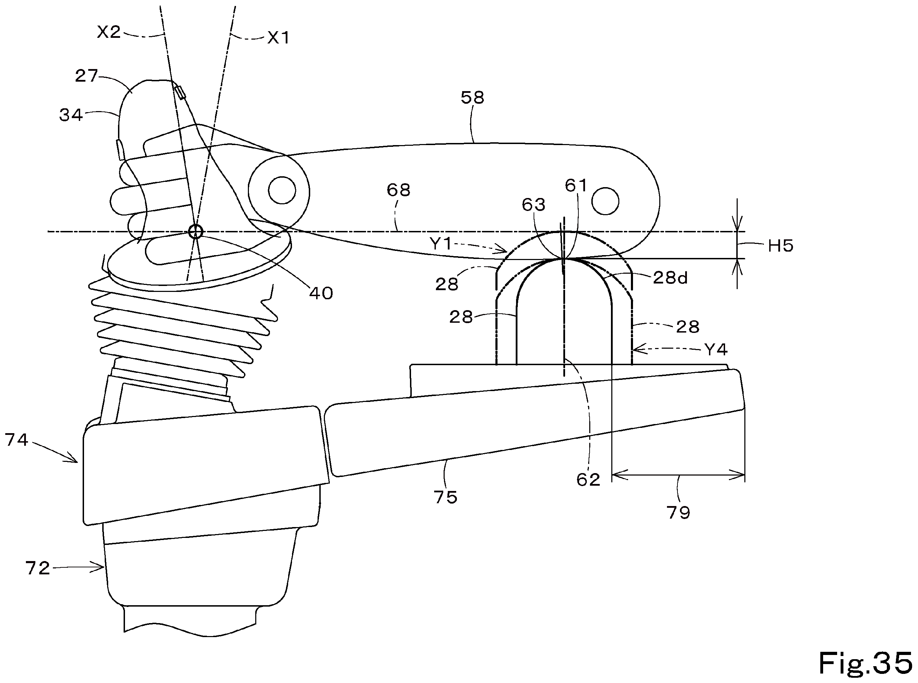

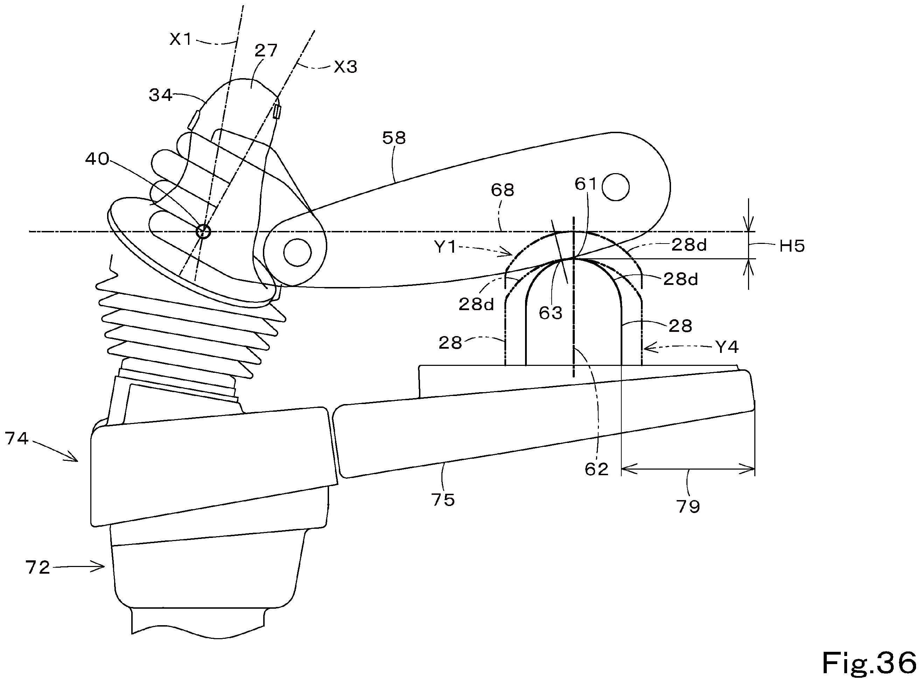

FIGS. 35 and 36 each illustrate an eighth variation. The eighth variation is a variation in which the height of the resting surface 28d of the armrest 28 is the same as the height of the resting surface 28d of the sixth variation indicated by a dot-dot-dash line Y4 and the curve of the curved surface of the resting surface 28d has a smaller radius than that of the armrest 28 in the sixth variation (basic example embodiment). FIG. 35 illustrates the operation actuator 27 when pushed, and FIG. 36 illustrates the operation actuator 27 when pulled.

A comparison between the eighth variation and the sixth variation shows that, in the eighth variation, the contact-portion-movement amount 81, the wrist angle 82 and the forearm rotation angle 83 are substantially the same as those in the sixth variation.

The other features (features of the working machine 1) of the second example embodiment are substantially the same as those in the first example embodiment. Therefore, the description thereof is omitted.

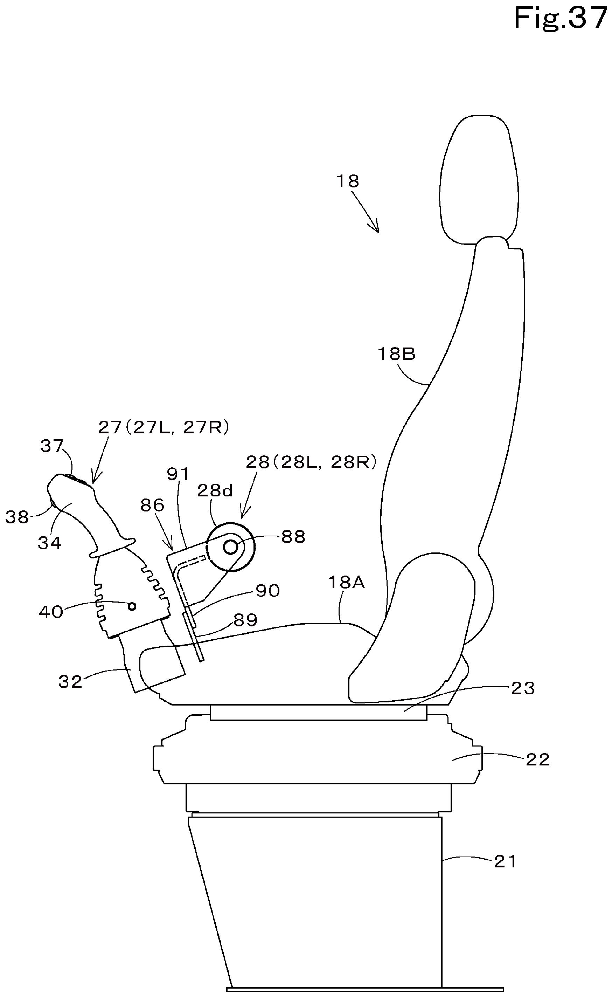

FIGS. 37 to 50 each illustrate a third example embodiment.

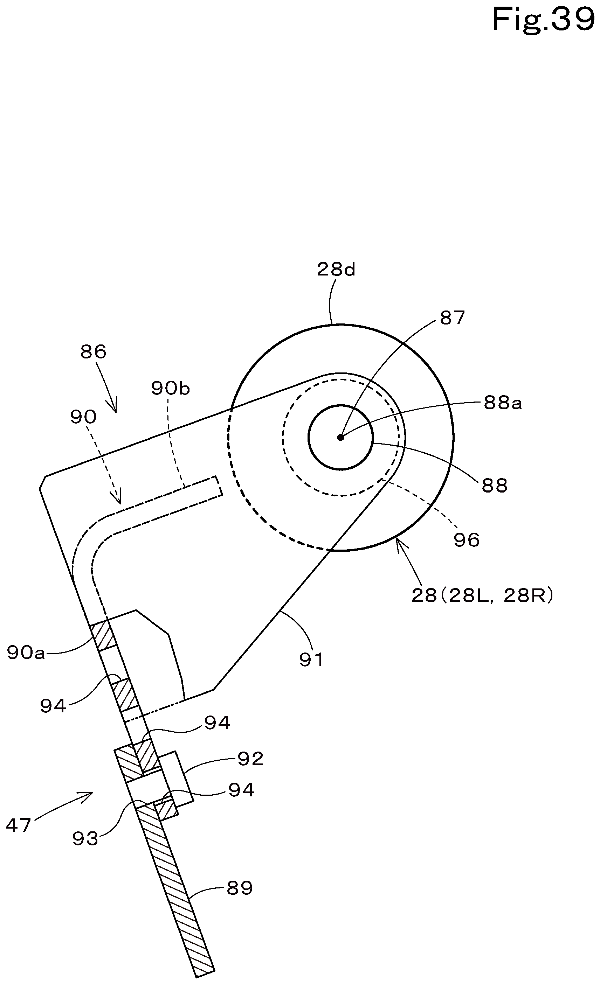

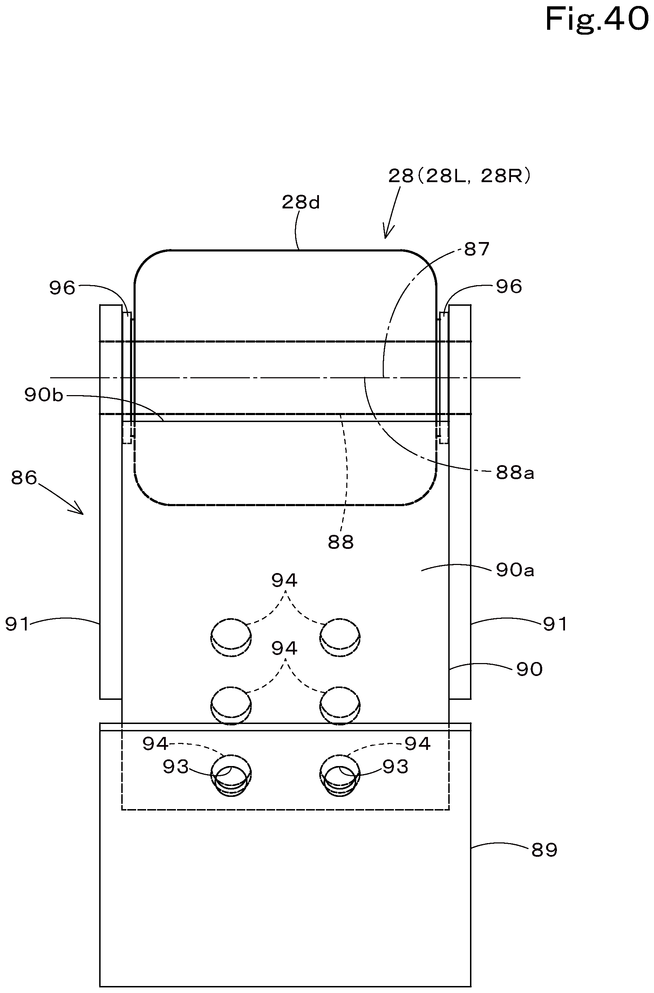

The third example embodiment is an example embodiment in which each armrest 28 includes an outer shape of a cylinder and is rotatable about a central axis (see FIGS. 39 and 40) 87 of the cylinder. The armrest 28 of the second example embodiment includes a cylindrical tube that includes a central axis extending in the machine body width direction K2.

Because the armrest 28 of the present third example embodiment includes an outer shape of a cylinder, the resting surface 28d, which is a top surface of the armrest 28 for the forearm 58 of the user 57 to be rested on, includes a curved surface that is curved to be convex upward in a side view of the armrest 28 and is continuous from a position forward of the apex 61 of the curved surface to a position rearward of the apex 61.

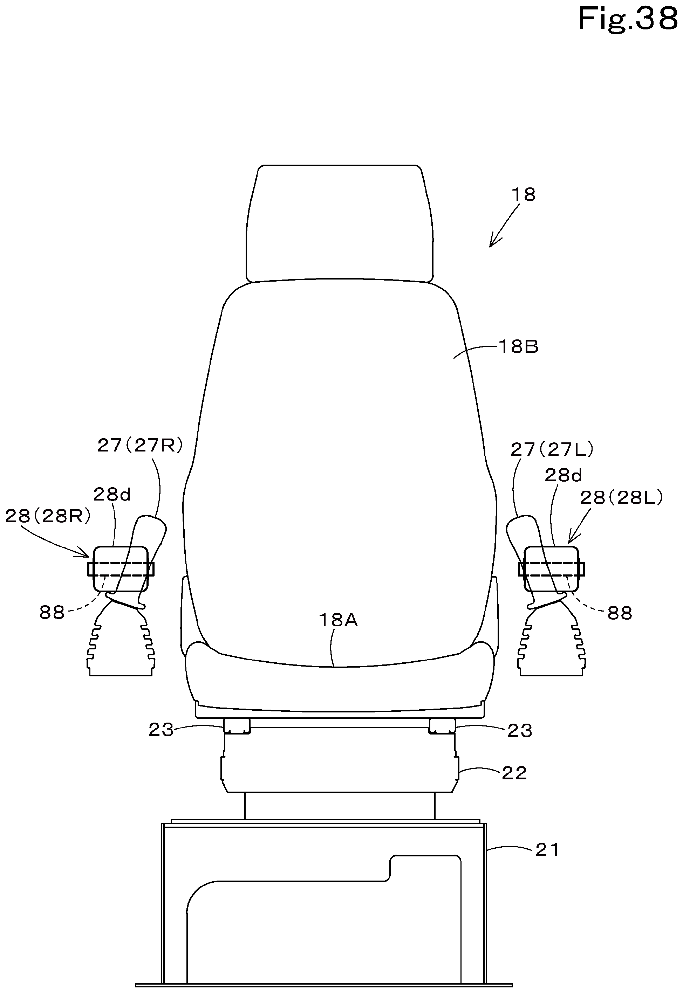

FIGS. 37 to 48 illustrate an example embodiment where the armrest 28 including an outer shape of a cylinder is used in the operation portion 24 of the first example embodiment. That is, as shown in FIGS. 37 and 38, the operation actuators 27 are provided at the left and at the right of the seat 18 and the cylindrical armrests 28 are located rearward of the respective left and right operation actuators 27.

The example embodiment in FIGS. 37 to 48 illustrates main features. Portions not illustrated in FIGS. 37 to 48 are the same as those in the first example embodiment.

As shown in FIGS. 39 and 40, the central axis 87 of each cylindrical armrest 28 extends in the machine body width direction K2. Specifically, the armrest 28 is rotatably supported by an armrest bracket 86 via a rotation support shaft 88 which includes an axis 88a extending in the machine body width direction K2. The central axis 87 of the armrest 28 is concentric with the axis 88a of the rotation support shaft 88.

As shown in FIGS. 39 and 40, the armrest bracket 86 includes a first plate member 89, a second plate member 90 and third plate member(s) 91. The first plate member 89 has the same configuration as the first plate 48 of the first example embodiment and is fixed to the console bracket 29. That is, the first plate member 89 has a flat shape and is provided behind the valve bracket 33 such that a plate surface thereof faces forward with respect to the machine body, and a lower portion of a front surface of the first plate member 89 is fixed to an upper portion of the valve bracket 33. The first plate member 89 is positioned such that the first plate member 89 is inclined diagonally upward and forward.

The second plate member 90 includes a first section 90a with a plate surface thereof facing forward with respect to the machine body, and a second section 90b with a plate surface thereof facing upward, and an upper portion of the first section 90a and a front portion of the second section 90b are connected in an L shape. The first section 90a is inclined at the same angle as the first plate member 89, and is placed on a rear surface of the first plate member 89 and is attached to the first plate member 89 via a pair of left and right bolts 92. The bolts 92 pass through the first section 90a and are screwed into screw holes 93 in the first plate member 89.

The first section 90a includes insertion holes 94 each for passage of a corresponding one of the bolts 92. A plurality of (three) of such insertion holes 94 are provided for each bolt 92 and are arranged in the up-down direction along the inclination direction of the first section 90a. The position of the second plate member 90 in the up-down direction relative to the first plate member 89 is adjustable by unscrewing and removing the bolts 92 from the screw holes 93, moving the first section 90a by linearly sliding the first section 90a along the plate surface of the first plate member 89, and screwing and fastening the bolts 92 into the screw holes 93 at the moved position. The up-down position adjustment mechanism 47 configured to adjust the position of the armrest 28 in the up-down direction includes the first plate member 89, the first section 90a of the second plate member 90, the bolts 92 and/or the like.

The second section 90b extends rearward from the upper portion of the first section 90a. Specifically, the second section 90b extends from the upper portion of the first section 90a such that the second section 90b is inclined diagonally rearward and upward.

The third plate members 91 are provided at the left and right sides of the second plate member 90. That is, a pair of the left and right third plate members 91 are provided. Front portions of the left and right third plate members 91 are fixed to the second section 90b. Rear portions of the third plate members 91 project rearward relative to the second section 90b. The armrest 28 is provided between the left and right third plate members 91 behind the second section 90b. An annular circular plate 96 is provided between the armrest 28 and each third plate member 91. The rotation support shaft 88 extends through one of the third plate members 91, one of the annular circulate plates 96, the armrest 28, the other of the annular circular plates 96, and the other of the third plate members 91.

In the above-described example embodiment, the structure in which the armrest 28 is rotatable about the central axis 87 (axis) may be achieved by the armrest 28 fixed to the rotation support shaft 88 and the rotation support shaft 88 supported by the armrest bracket 86 rotatably about the axis, and may be achieved by the rotation support shaft 88 extending through the armrest 28 such that the rotation support shaft 88 is rotatable relative to the armrest 28 and the rotation support shaft 88 being fixed to the armrest bracket 86.

Note that, although the present example embodiment illustrates the armrest bracket 86 configured to not allow the adjustment of the position of the armrest 28 in the front-rear direction, the armrest bracket 86 may be configured to allow the adjustment of the position of the armrest 28 in the front-rear direction.

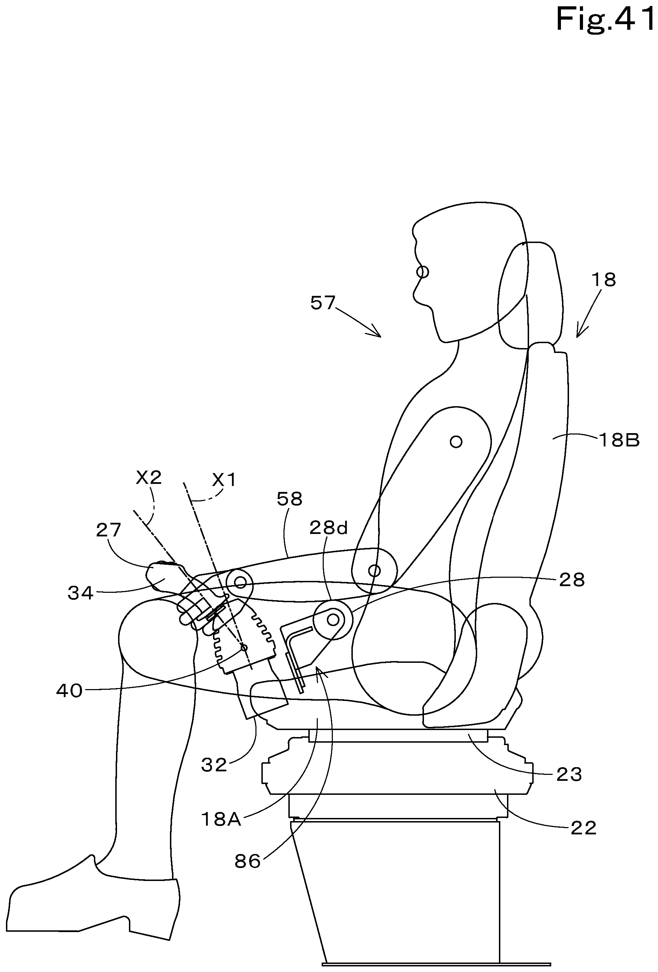

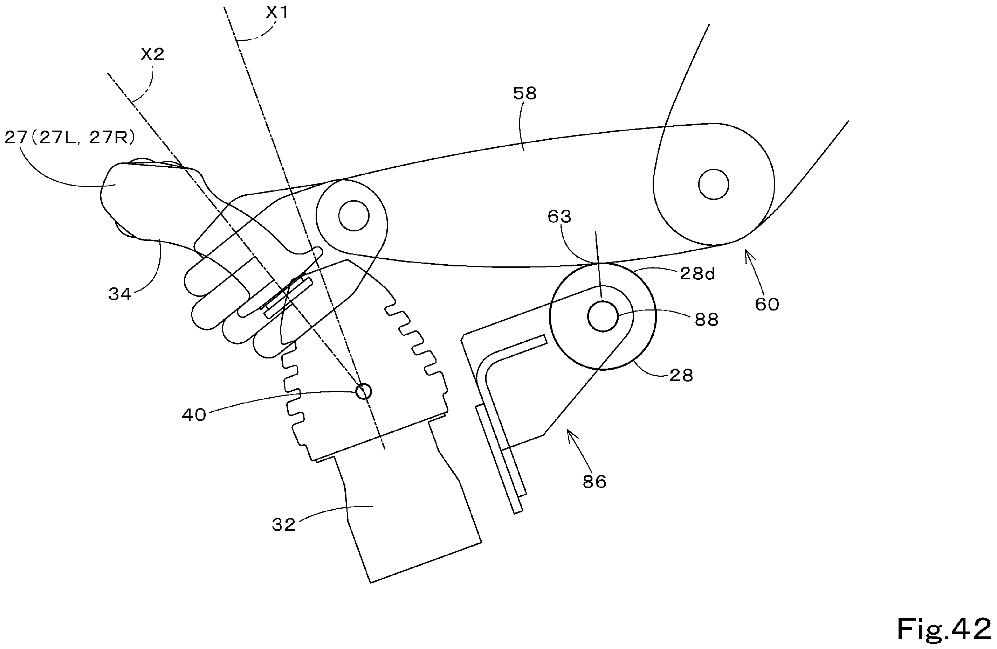

FIGS. 41 and 42 each illustrate the operation actuator 27 which is pushed by the user gripping the lower portion of the grip 34. When the operation actuator 27 is pushed in such a manner, the portion including the elbow 60 of the forearm 58 of the user 57 is rested on the armrest 28.

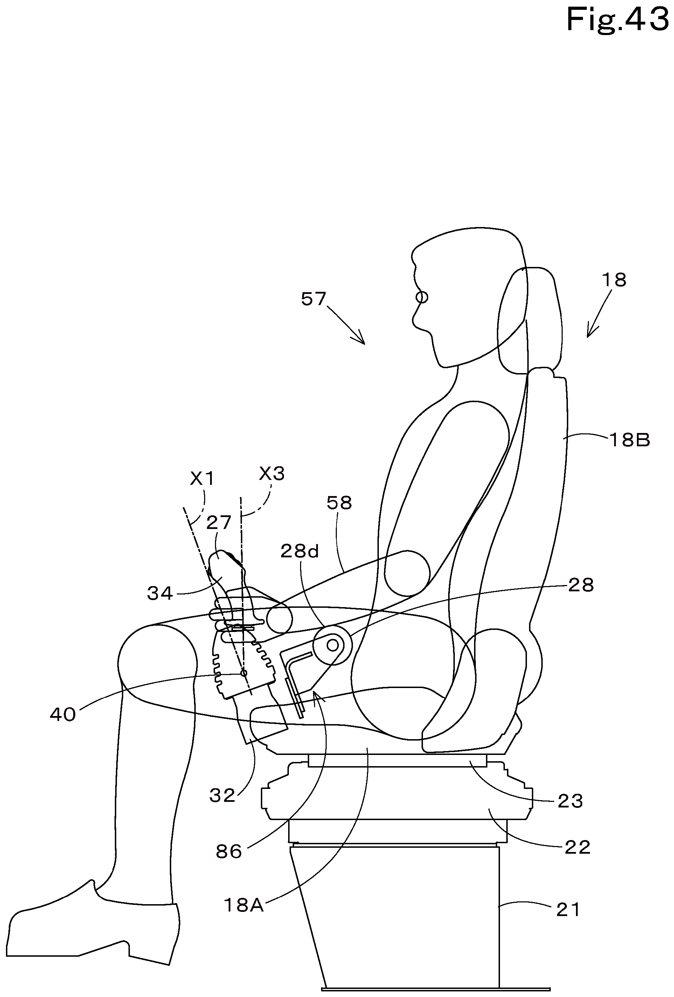

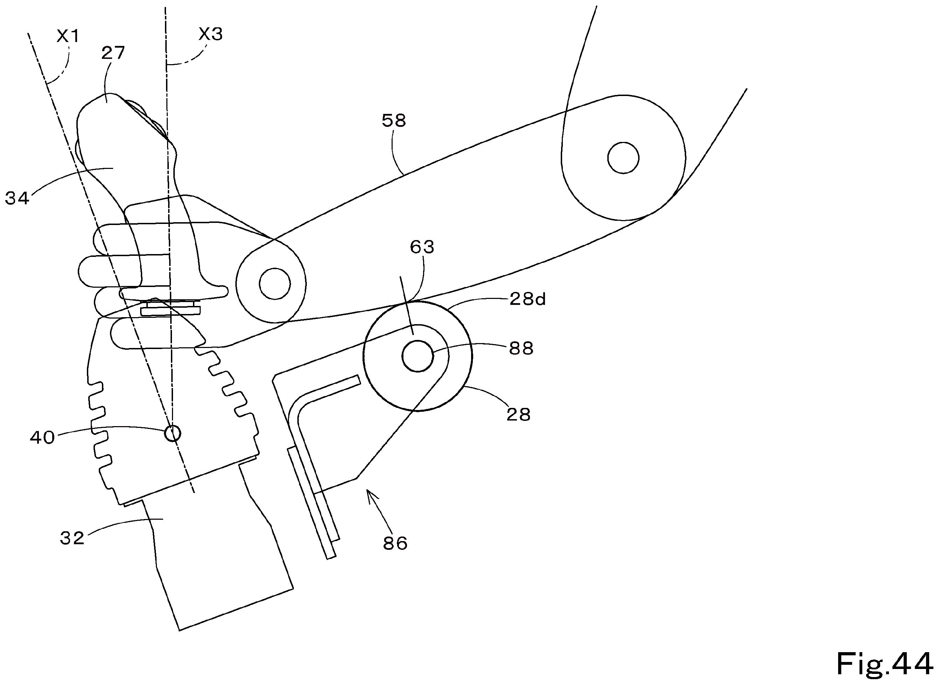

FIGS. 43 and 44 each illustrate the operation actuator 27 which is pulled by the user gripping the lower portion of the grip 34. When the operation actuator 27 is pulled in such a manner, an intermediate portion of the forearm 58 of the user 57 is rested on the armrest 28.

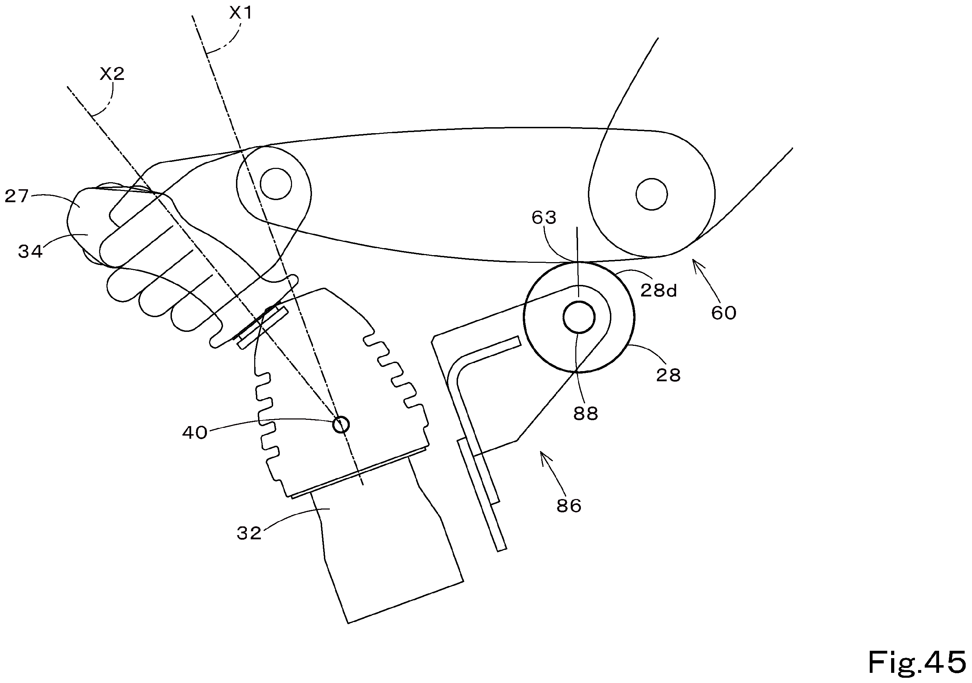

FIG. 45 illustrates the operation actuator 27 which is pushed by the user gripping an intermediate portion of the grip 34. When the operation actuator 27 is pushed in such a manner, the portion including the elbow 60 of the forearm 58 of the user 57 is rested on the armrest 28.

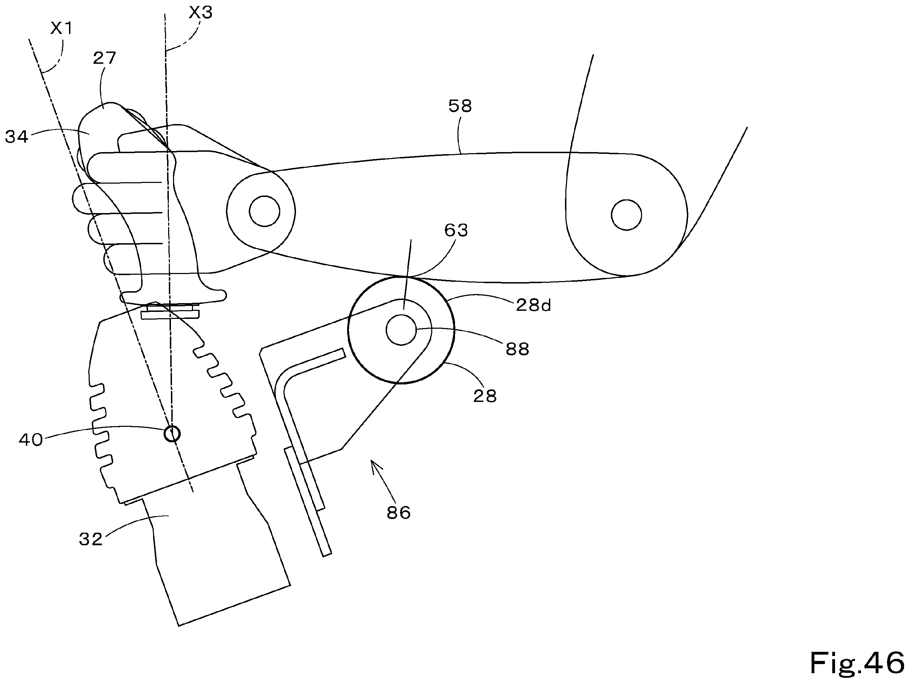

FIG. 46 illustrates the operation actuator 27 which is pulled by the user gripping the intermediate portion of the grip 34. When the operation actuator 27 is pulled in such a manner, the intermediate portion of the forearm 58 of the user 57 is rested on the armrest 28.

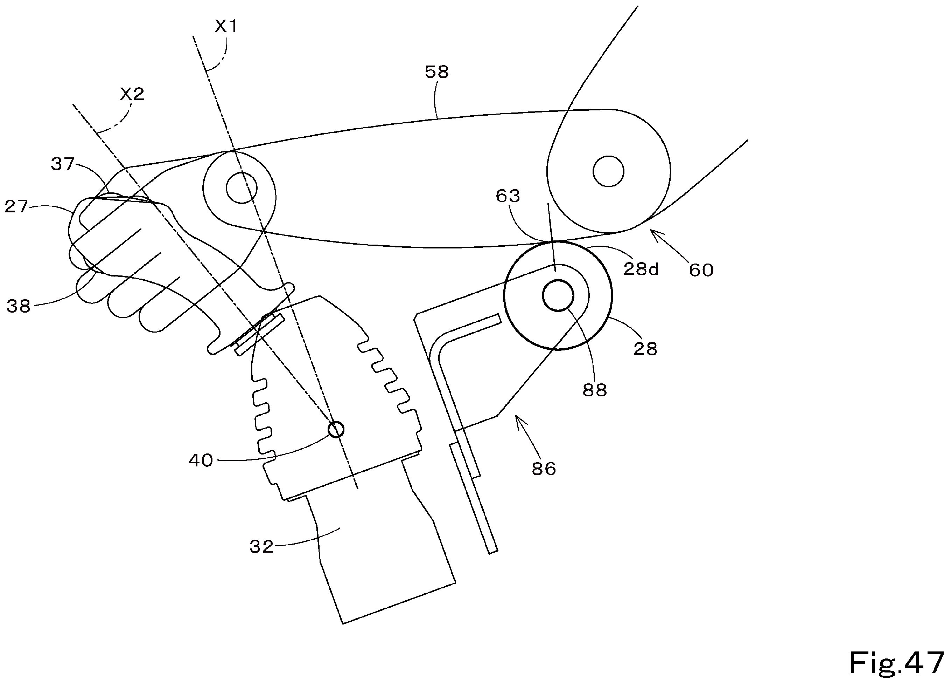

FIG. 47 illustrates the operation actuator 27 which is pushed by the user gripping an upper portion of the grip 34 (including cases where the first switch 37 and/or the like are also operated). When the operation actuator 27 is pushed in such a manner, the portion including the elbow 60 of the forearm 58 of the user 57 is rested on the armrest 28.

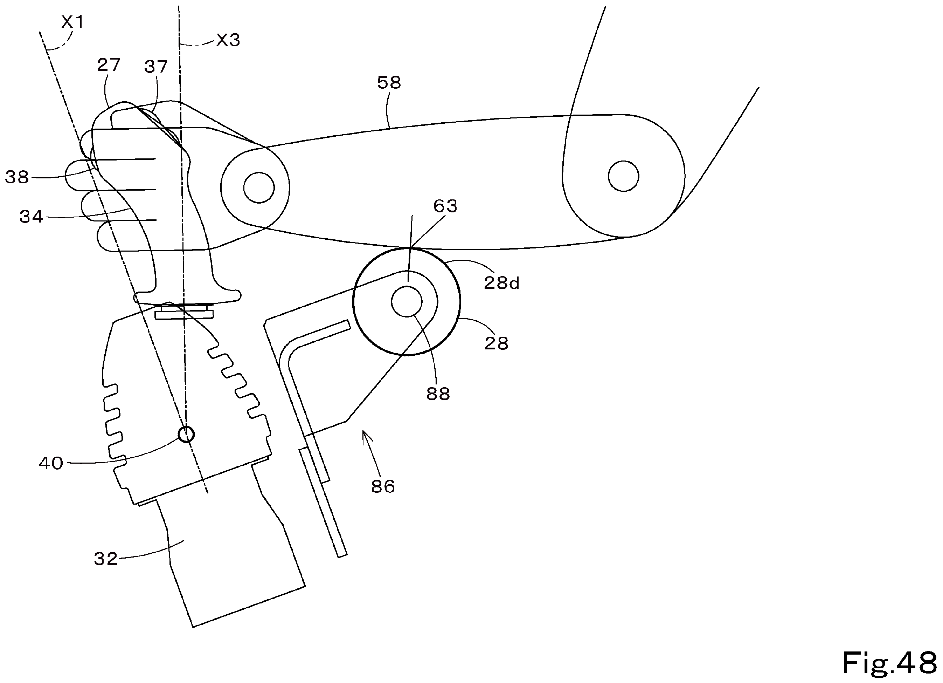

FIG. 48 illustrates the operation actuator 27 which is pulled by the user gripping the upper portion of the grip 34 (including cases where the first switch 37 and/or the like are also operated). When the operation actuator 27 is pulled in such a manner, the intermediate portion of the forearm 58 of the user 57 is rested on the armrest 28.

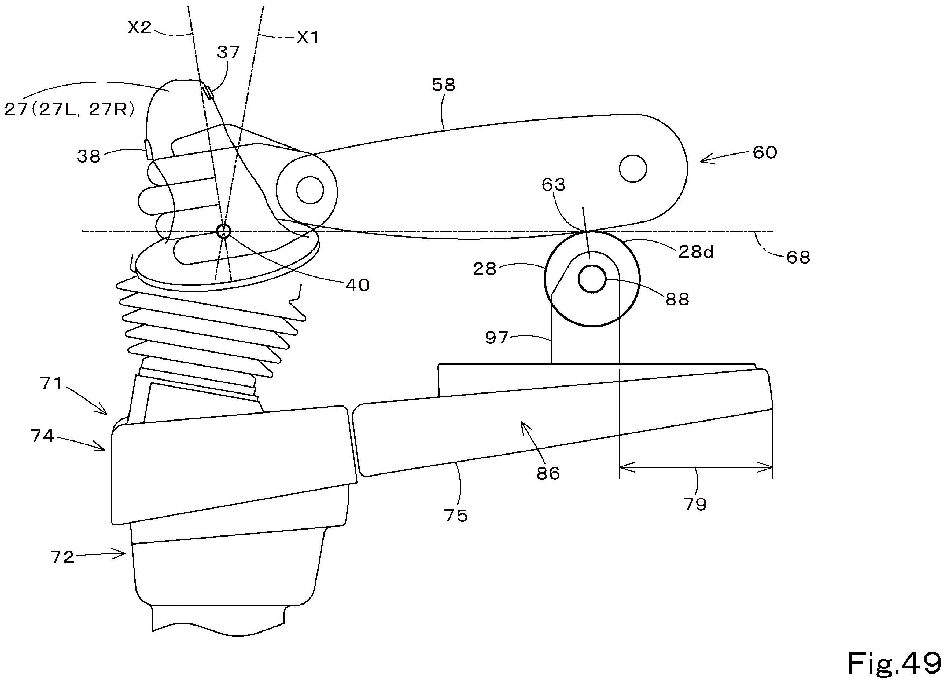

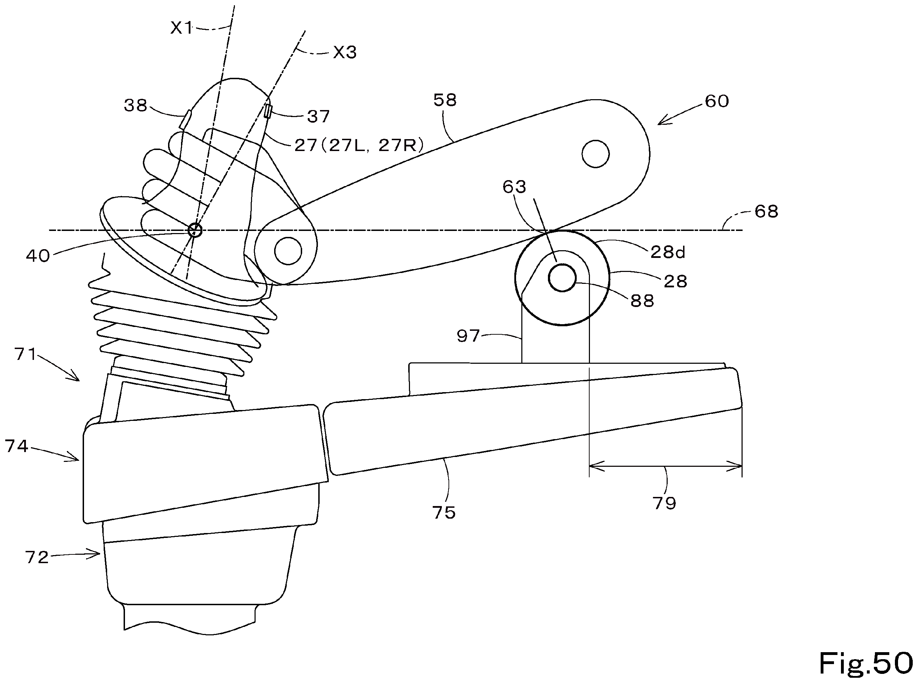

FIGS 49 and 50 each illustrate an example embodiment in which the cylindrical armrests 28 are used in the operation portion 24 of the second example embodiment. That is, a pair of the operation actuators 27 are provided forward of the seat 18 and arranged in the machine body width direction K2, and the cylindrical armrests 28 are located rearward of the respective left and right operation actuators 27. In the example embodiment in FIGS. 49 and 50, main features are illustrated. Portions not illustrated in FIGS. 49 and 50 are the same in configuration as those of the second example embodiment.

In the example embodiment illustrated in FIGS. 49 and 50, an armrest bracket 97 is fixed to the support base 75. The armrest bracket 97 is configured to not allow the adjustment of the position of the armrest 28 in the front-rear direction or the up-down direction, but the armrest bracket 97 may be configured to allow the adjustment of the position of the armrest 28 in the front-rear direction and the up-down direction. Also in the example embodiment illustrated in FIGS. 49 and 50, the portion 79 of the support base 75 that extends rearward from the armrest 28 is not essential, and it is possible to make the operation platform 71 compact, as with the case of the second example embodiment.

FIG. 49 illustrates the operation actuator 27 which is pushed by the user gripping the grip 34 (including cases where the first switch 37 and/or the like are also operated). When the operation actuator 27 is pushed in such a manner, the portion including the elbow 60 of the forearm 58 of the user 57 is rested on the armrest 28.

FIG. 50 illustrates the operation actuator 27 which is pulled by the user gripping the grip 34 (including cases where the first switch 37 and/or the like are also operated). When the operation actuator 27 is pulled in such a manner, the portion including the elbow 60 of the forearm 58 of the user 57 is rested on the armrest 28.

In the third example embodiment, when the operation actuator 27 is pivoted in the front-rear direction K1, the armrest 28 rotates as the forearm 58 moves along the front-rear direction K1. With this, the contact portion 63 between the forearm 58 and the resting surface 28d moves (the position of the contact portion 63 on the resting surface 28d changes) without sliding movement between the forearm 58 and the resting surface 28d, and the forearm 58 can be moved without sliding movement on the resting surface 28d (can be moved in rolling contact with the resting surface 28d). With this, it is possible for the user to pivot the operation actuator 27 while sufficiently pressing the forearm 58 against the armrest 28 (resting surface 28d). It is in turn possible to stably operate the operation actuator 27.

In the third example embodiment, not only when the user grips the lower portion of the grip 34 but also when the user grips any position of the grip 34 in the up-down direction, and also when the user operates the first switch 37 and/or the like, the forearm 58 can smoothly move in the machine body front-rear direction K1.

Furthermore, when the user grips the lower portion of the grip 34 and operates the operation actuator 27, the movement of a shoulder absorbs the stroke of the operated operation actuator 27, making it unnecessary to cause the wrist 59 and/or the forearm 58 to protrude outward. This makes it possible to reduce the space required for operation.

In the present third example embodiment, the armrest 28 does not need to include an outer shape of a cylinder. It is only necessary that the top surface 28d of the armrest 28 be the resting surface 28d for the forearm 58 of the user 57 to be rested on and be a curved surface that is curved to be convex upward in a side view of the armrest 28 and is continuous from a position forward of the apex 61 of the curved surface to a position rearward of the apex 61. The armrest 28 need only be rotatable along the circumferential direction of the resting surface 28d.

In the present example embodiment, the armrest 28 does not need to rotate 360°. A spring (biasing member) to keep the armrest 28 in an initial position (a position where the forearm 58 is not rested on the armrest 28) may be provided.

Example embodiments of the present invention provide working machines 1 as described in the following items.

(Item 1) A working machine 1 including a seat 18, an operation actuator 27 provided in a vicinity of the seat 18, and an armrest 28 located rearward of the operation actuator 27 at a predetermined distance from the operation actuator 27, wherein the operation actuator 27 is configured to be gripped and pivoted in a front-rear direction K1 by a user 57 sitting in the seat 18, and the armrest 28 includes a resting surface 28d for a forearm 58 of the user 57 to be rested on, the resting surface 28d being a curved surface that is curved to be convex upward in a side view of the armrest 28 and is continuous from a position forward of the apex 61 to a position rearward of the apex 61.

With the working machine 1 according to item 1, it is possible to move the forearm 58 without sliding movement on the resting surface 28d. With this, it is possible to pivot the operation actuator 27 while sufficiently pressing the forearm 58 against the armrest 28 (resting surface 28d) and achieve the stable operation of the operation actuator 27.

(Item 2) The working machine 1 according to item 1, wherein the operation actuator 27 includes a grip 34 to be gripped by the user 57, and a space 67 is provided in an interval 66 between the grip 34 and the armrest 28 in which, when the user 57 grips the grip 34 and pivots the operation actuator 27 in the front-rear direction K1 with the forearm 58 rested on the resting surface 28d, a portion of the forearm 58 is located lower than at least one of a tangent 68 to the apex 61 or a straight line 70 connecting a bottom end of the grip 34 and the apex 61.

With the working machine 1 according to item 2, when the user 57 grips the grip 34 and operates the operation actuator 27 in the front-rear direction K1, the forearm 58 is at least partially located within the space 67 between the grip 34 and the armrest 28, making it possible to operate the operation actuator 27 smoothly.

(Item 3) The working machine 1 according to item 2, wherein the operation actuator 27 is configured to be pivoted about a pivot center 40 located below the grip 34, and the operation actuator 27 is configured such that a portion of the forearm 58 that is between a wrist 59 and a portion of the forearm 58 that is rested on the armrest 28 is at least partially located within the space 67 when the user 57 grips a lower portion of the grip 34 and pivots the operation actuator 27 forward.

With the working machine 1 according to item 3, in the configuration in which the operation actuator 27 is pivoted about the pivot center 40 located below the grip 34, when the user 57 grips the lower portion of the grip 34 and operates the operation actuator 27 forward, the forearm 58 is at least partially located within the space 67 in the interval 66 between the grip 34 and the armrest 28, making it possible to operate the operation actuator 27 smoothly .

(Item 4) The working machine 1 according to item 2, wherein the operation actuator 27 is configured to be pivoted about the pivot center 40 located within the grip 34, and the operation actuator 27 is configured such that a portion of the forearm 58 that is between a wrist 59 and a portion of the forearm 58 that is rested on the armrest 28 is at least partially located within the space 67 when the user 57 grips the grip 34 and pivots the operation actuator 27 backward.

With the working machine 1 according to item 4, in the configuration in which the operation actuator 27 is pivoted about the pivot center 40 located within the grip 34, when the user 57 grips the lower portion of the grip 34 and operates the operation actuator 27 rearward, the forearm 58 is at least partially located within the space 67 in the interval 66 between the grip 34 and the armrest 28, making it possible to operate the operation actuator 27 smoothly.

(Item 5) The working machine 1 according to any one of items 1 to 4, wherein the curved surface of the resting surface 28d is configured such that a contact portion 63 between the forearm 58 and the resting surface 28d is allowed to move without sliding movement between the forearm 58 and the resting surface 28d when the user 57 grips the operation actuator 27 and pivots the operation actuator 27 in the front-rear direction K1 with the forearm 58 rested on the resting surface 28d.

With the working machine 1 according to item 5, when the user 57 grips the operation actuator 27 and pivots the operation actuator 27 in the front-rear direction K1 with the forearm 58 rested on the resting surface 28d, it is possible for the user to pivot the operation actuator 27 while sufficiently pressing the forearm 58 against the armrest 28 .

(Item 6) The working machine 1 according to any one of items 1 to 5, further including an armrest bracket 86 to support the armrest 28, wherein the armrest bracket 86 includes a front-rear position adjustment mechanism 46 to adjust a position of the armrest 28 in the front-rear direction K1.

With the working machine 1 according to item 6, it is possible to set the position of the armrest 28 in the front-rear direction K1 relative to the operation actuator 27 at an appropriate position.

(Item 7) The working machine 1 according to any one of items 1 to 6, further including an armrest bracket 86 to support the armrest 28, wherein the armrest bracket 86 includes an up-down position adjustment mechanism 47 to adjust a position of the armrest 28 in an up-down direction.

With the working machine 1 according to item 7, it is possible to set the position of the armrest 28 in the up-down direction relative to the operation actuator 27 at an appropriate position.

(Item 8) The working machine 1 according to any one of items 1 to 7, wherein the armrest 28 is rotatable along a circumferential direction of the resting surface 28d.

With the working machine 1 according to item 8, when the user grips the operation actuator 27 and pivots the operation actuator 27 in the front-rear direction K1 with the forearm 58 rested on the armrest 28, the armrest 28 moves as the forearm 58 moves in the front-rear direction K1. This makes it possible to pivot the operation actuator 27 while sufficiently pressing the forearm 58 against the armrest 28.

(Item 9) The working machine 1 according to any one of items 1 to 8, wherein the armrest 28 includes an outer shape of a cylinder and is rotatable about a central axis 87 of the cylinder.

Also with the working machine 1 according to item 9, when the user grips the operation actuator 27 and pivots the operation actuator 27 in the front-rear direction K1 with the forearm 58 rested on the armrest 28, the armrest 28 moves as the forearm 58 moves in the front-rear direction K1. This makes it possible to pivot the operation actuator 27 while sufficiently pressing the forearm 58 against the armrest 28.

(Item 10) The working machine 1 according to any one of items 1 to 9 excluding item 3, wherein a pair of the operation actuators 27 are located forward of the seat 18 and are arranged in a machine body width direction K2, a pair of the armrests 28 are located rearward of the respective pair of operation actuators 27 and are arranged in the machine body width direction K2, and the pair of armrests 28 are inclined such that each of the pair of armrests 28 is inclined forward in a direction away from the other of the pair of armrests 28 along the machine body width direction K2 with increasing distance from a midpoint between the pair of armrests 28 in the machine body width direction K2.

With the working machine 1 according to item 10, in the configuration in which the pair of the operation actuators 27 are located forward of the seat 18 and are arranged in the machine body width direction K2, it is possible to pivot the operation actuator 27 while sufficiently pressing the forearm 58 against the armrest 28, and possible to achieve stable operation of the operation actuators 27.

While preferred embodiments of the present invention have been described above, it is to be understood that the embodiments disclosed herein are considered as examples in all aspects and are not considered as limitations. The scope of the present invention is to be determined not by the foregoing description but by the claims, and is intended to include all variations and modifications within the scope of the claims and their equivalents.

### Reference Signs List

- 1: Working machine
- 18: Seat
- 27: Operation actuator
- 28: Armrest
- 28d: Resting surface
- 34: Grip
- 40: Pivot center
- 44: Armrest bracket
- 46: Front-rear position adjustment mechanism
- 47: Up-down position adjustment mechanism
- 57: User
- 58: Forearm
- 58a: Part
- 59: Wrist
- 60: Elbow
- 61: Apex
- 63: Contact portion
- 66: Interval between the grip and the armrest
- 67: Space
- 87: Central axis
- K1: Front-rear direction
- K2: Machine body width direction

## Claims

1. A working machine comprising:
a seat;
an operation actuator provided in a vicinity of the seat; and
an armrest located rearward of the operation actuator at a predetermined distance from the operation actuator; wherein
the operation actuator is configured to be gripped and pivoted in a front-rear direction by a user sitting in the seat; and
the armrest includes a resting surface for a forearm of the user to be rested on, the resting surface being a curved surface that is curved to be convex upward in a side view of the armrest and is continuous from a position forward of an apex of the curved surface to a position rearward of the apex.

2. The working machine according to claim 1, wherein
the operation actuator includes a grip to be gripped by the user; and
a space is provided in an interval between the grip and the armrest in which, when the user grips the grip and pivots the operation actuator in the front-rear direction with the forearm rested on the resting surface, a portion of the forearm is located lower than at least one of a tangent to the apex or a straight line connecting a bottom end of the grip and the apex.

3. The working machine according to claim 2, wherein
the operation actuator is configured to be pivoted about a pivot center located below the grip; and
the operation actuator is configured such that a portion of the forearm that is between (i) a wrist and (ii) a portion of the forearm that is rested on the armrest is at least partially located within the space when the user grips a lower portion of the grip and pivots the operation actuator forward.

4. The working machine according to claim 2, wherein
the operation actuator is configured to be pivoted about a pivot center located within the grip; and
the operation actuator is configured such that a portion of the forearm that is between (i) a wrist and (ii) a portion of the forearm that is rested on the armrest is at least partially located within the space when the user grips the grip and pivots the operation actuator rearward.

5. The working machine according to any one of claims 1 to 4, wherein
the curved surface of the resting surface is configured such that a contact portion between the forearm and the resting surface is allowed to move without sliding movement between the forearm and the resting surface when the user grips the operation actuator and pivots the operation actuator in the front-rear direction with the forearm rested on the resting surface.

6. The working machine according to any one of claims 1 to 5, further comprising:
an armrest bracket to support the armrest; wherein
the armrest bracket includes a front-rear position adjustment mechanism to adjust a position of the armrest in the front-rear direction.

7. The working machine according to any one of claims 1 to 6, further comprising:
an armrest bracket to support the armrest; wherein
the armrest bracket includes an up-down position adjustment mechanism to adjust a position of the armrest in an up-down direction.

8. The working machine according to any one of claims 1 to 7, wherein
the armrest is rotatable along a circumferential direction of the resting surface.

9. The working machine according to any one of claims 1 to 8, wherein
the armrest includes an outer shape of a cylinder and is rotatable about a central axis of the cylinder.

10. The working machine according to any one of claims 1 to 9 excluding claim 3, wherein
a pair of the operation actuators are located forward of the seat and are arranged in a machine body width direction;
a pair of the armrests are located rearward of the respective pair of operation actuators and are arranged in the machine body width direction; and
the pair of armrests are inclined such that each of the pair of armrests is inclined forward in a direction away from the other of the pair of armrests along the machine body width direction with increasing distance from a midpoint between the pair of armrests in the machine body width direction.
